(19) **Europäisches Patentamt European Patent Office Office européen des brevets**

(11) **EP 3 709 797 B1**

(12) **EUROPEAN PATENT SPECIFICATION**

(45) Date of publication and mention of the grant of the patent:
**13.04.2022 Bulletin 2022/15**

(21) Application number: **18807062.7**

(22) Date of filing: **19.11.2018**

(51) International Patent Classification (IPC):
*A01K 61/60* (2017.01)      *A01K 61/65* (2017.01)

(52) Cooperative Patent Classification (CPC):
**A01K 61/60; A01K 61/65;** Y02A 40/81

(86) International application number:
**PCT/EP2018/081826**

(87) International publication number:
**WO 2019/097070 (23.05.2019 Gazette 2019/21)**

(54) **FISH FARMING STRUCTURE**

AUFBAU EINER FISCHFARM

STRUCTURE D'ÉLEVAGE DE POISSONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2017 NO 20171856**
**06.08.2018 NO 20181048**

(43) Date of publication of application:
**23.09.2020 Bulletin 2020/39**

(73) Proprietor: **Pelaqua AS**
**0358 Oslo (NO)**

(72) Inventors:
• **HEIERVANG, Mads Fredrik**
**0358 Oslo (NO)**
• **SØRBY, Bernt**
**0452 Oslo (NO)**
• **GRØTHE SANDNES, Pål**
**0375 Oslo (NO)**
• **GRAVDAL JOHANSEN, Audun**
**3475 Sætre (NO)**

(74) Representative: **Onsagers AS**
**P.O. Box 1813 Vika**
**0123 Oslo (NO)**

(56) References cited:
CN-A- 103 125 414      CN-A- 106 719 214
GB-A- 2 473 648        US-A- 772 360

## Description

The present invention relates to a fish farming structure that can be used in open sea where rough weather, including high winds and waves, occur regularly.

Fish farming has over the last decades become a large industry and fish farms can be found along the coast of countries like Norway, the UK and Chile, usually in waters such as fjords and inlets where the fish farms are protected from high winds and large waves by hills, mountains and other similar geographical features of the land surrounding waters in which the fish farms are located. In addition to the cost of repairing a fish farm, a damaged fish farm may result in the fish escaping from the fish farm which would be highly undesirable due to the risk of spreading disease and parasites such as salmon louse, with the fish that escape. Escaped fish would also mate with wild salmon, changing the wild salmon genome. Lost fish would of course also cause lost income. The fish farming structures that have been suggested for use in open, unprotected waters are therefore large, rigid and highly reinforced steel structures that are designed to be capable of riding off heavy storms without getting damaged or structures that are submerged and therefore not affected by rough weather. To the knowledge of the applicant, no large fish farming structure located at the surface of the water in open waters exposed to rough weather is or have been operational to date.

Many fish farming structures have been suggested in the literature. The Chinese patent publication CN 106719215 A discloses a submerged fish farming cage while the publication CN 106719214 A discloses the anchoring of the submerged fish farming cage as disclosed in CN 106719215 A. As described in CN 106719215 A, the fish farming system comprises a frame structure and a net which is arranged on the frame structure. The frame structure is made of a number of rigid rings which are interconnected with a plurality of ropes where each rope extends in an axial direction of the fish farming cage and is attached to the circumference of all the rings of the fish farming cage. As shown in CN 106719214 A, each end of fish farming cage is fixedly anchored to the bottom of the sea with an anchoring line attached to either end of the fish farming cage in the longitudinal direction of the and extend to respective anchoring piles on the bottom. Furthermore, the fish farming cage is submerged and provided with buoyancy elements to keep it in the desired, submerged position and prevent it from sinking. The axially arranged ropes that are connected to all the rigid rings together with the tight mooring lines of the fish farming cage in opposite axial directions creates a rigid fish farming structure which would not survive a storm if it was arranged at or close to the surface of the body of water.

In the British patent application GB 2473648 A, a fish farming structure is disclosed that comprises a large net arranged around a number of frame rings. The fish farming structure further comprises a plurality of fish cages that are arranged within the main frame rings that are arranged along the main part of the fish farming structure. The fish cages are attached to respective frame rings with several ropes or bars. The fish cages are reinforced with a number of vertical bars and horizontal rings surrounding the cages, and the system are provided with a number of ropes or bars that extend through the longitudinal length of the fish farming structure where each rope or bar is attached to corresponding rings on adjacent fish cages.

In the international patent application WO 2014/072788 A1 a fish cage structure is disclosed that comprises two rectangular, substantially vertical frames arranged at either end of the fish cage structure and a number of grid ropes attached to the upper and lower sides of the rectangularly shaped frames.

None of these fish farming devices would be suitable for use at the surface of the water in open seas in rough weather when wave heights can reach 25-30 meters and more.

Moreover, CN 103 125 414 A discloses a fish farming structure for use semi-submerged in open sea and during severe weather conditions, the fish farming structure comprising at least a first support device and a second support device, a flexible net that extends therebetween, wherein the fish farming structure is moored at both ends, wherein the support devices are floating and submergible to a desired level and the lower part of the support devices is provided with at least one ballast tank each for adjustment of the draft of the support devices and for hydrostatic stability of the support devices.

US 772 360 A discloses a fish farming structure for use semi-submerged in open sea and during severe weather conditions, the fish farming structure comprising at least a first support device and a second support device, a flexible net that extends therebetween, wherein the first support device and the second support device are independently moored.

Hence, the object of the present invention has been to develop a fish farming structure that can be operated in open sea unprotected from hills, mountains and other geographical features and is capable of withstanding loads from waves and wind in rough weather.

It has also been an object of the present invention to develop a fish farming structure that can be operated at the surface of the water in open sea unprotected from hills, mountains and other geographical features, and that can remain in a position at the surface of the water during rough weather with strong winds and high waves.

It has also been an object of the present invention to obtain a fish farming structure that is designed to work with and adapt to the external loads on the fish farming structure during rough weather instead of working against the external loads.

It has also been an object of the present invention to obtain a fish farming structure that is easy to operate in open sea.

It has further been an object to develop a fish farming structure for use in open sea that is relatively cheap to manufacture.

These objects are met with a fish farming structure as defined in independent claim 1. Further embodiments of the present invention are defined in the dependent claims.

Firstly, it should be noted that an open sea location should be understood as a location in open sea or a part of the sea where there is no land feature that provides shelter or protection against wind and waves when the weather is bad, i.e. there are high waves and/or high winds that may cause damage to a structure that is located in such an open sea location. Traditionally, offshore structures that are designed to operate in open sea and to be capable of withstanding severe storms are rigid, highly reinforced structures which means that the costs of building such offshore structures are high compared to similar structures that are operated in sheltered waters.

It should also be noted that the fish farming structure of the present invention may be used for fish but may of course also be used for offshore farming of other types of sea creatures for which the present fish farming structure is suitable.

The present fish farming structure comprises a set of semi-submerged, floating, substantially vertically oriented support frames or support devices, preferably made of steel, which support a system of fibre ropes forming a large underwater volume. Mesh nets are in turn supported on the fibre ropes, forming a net structure enclosing the entire volume making it suitable for fish farming. The shape of the volume will be axisymmetric about the longitudinal centreline of the volume with a slope towards the support frames when the fish farming structure is in a neutral position. This will ensure that dead fish gather towards lower parts or bottom parts of the support frames for easier collection. At the top, the net structure will be partly above water close to the support frames allowing a free water surface inside the enclosed volume.

The mooring lines in the longitudinal direction may be attached to an intermediate buoy for an increased longitudinal pretension. This increased pretension may be necessary to ensure a stable volume for the fish. The longitudinal mooring lines will also provide a longitudinal stiffness for the structure. In the transverse direction there may be a pair of mooring lines for each or some of the steel frame providing a transverse stiffness. The global load carrying system will comprise the ropes, preferably fibre ropes, at least two steel frames and the mooring system. The fish net is not of the main load carrying system, i.e. it will not be loaded (stretched) due to deformation of the system or provide significant stiffness to the system.

The main principle in the design of the present fish farming structure is that each support device, which is preferably a steel frame, will respond to first order wave loads independently of the other frame structures of the fish farming structure due to the flexibility in the fish farming structure. For slowly varying or stationary loads, on the other hand, the loads will be carried by interaction of the whole system. The design principle of the present fish farming structure is therefore contrary to other offshore structures of similar size, such as ships, in which wave loads induce large global bending moments.

The mooring system of the present fish farming structure will preferably comprise a set of catenary shaped mooring lines anchored to the sea bed. The mooring system is preferably designed to avoid large uplift forces at the anchor points which allows for anchor types designed for horizontal loading only. Relevant anchor types are fluke anchors and plate anchors, but alternative anchor types may also be considered depending on sea bed conditions.

The support frames may have a circular shape or, more preferably, a polygonal shape with straight pipe sections between the attachment joints for the fibre ropes. Alternatively, the support devices may have a U-shaped form or any other suitable form. In addition, support structures for attachment of mooring lines are located at two joint locations on the support devices. These support structures preferably have a simple regular arrangement. These types of structural elements are commonly used for offshore jacket structures and hull bracings of twin-pontoon semi-submersibles and similar support structure for attachment of anchor lines may be used for the present fish farming structure.

The present fish farming structure can be tuned to achieve the desired stability, buoyancy, and natural periods by varying the diameter in different parts of the ring by conical transitions. By including buoyancy tanks and/or ballast tanks, stability may be achieved by ballasting (or flooding) ballast tanks arranged in the lower part of the support device.

The nets are supported by the rope system and is preferably attached on the inside of the ropes, i.e. on the side of the rope structure facing the volume where fish will be kept, by appropriate means. The rope may be attached to the support frames using a spliced or clamped eye securely fastened at the end of each rope end which can be attached on bolt elements on the support frames without hot work. The ropes can be kept in place by means of locking bolts attached after the rope is in place. Other suitable ways of attaching the ropes to the support frames may of course also be used. At the intermediate rope-to-rope connections a clamping mechanism may be used to keep the shape of the rope system. Towards the steel frame, the fish net may be fastened with a clamping mechanism towards the inner side of the support frames so that the rope connections will be located outside of the enclosed volume.

The fish farming structure comprises a set of minimum two frame structures, i.e. a first frame structure and a second frame structure and optionally one or more intermediate support devices, connected by a rope structure to order to make up a volume in space. A mesh net is attached to the ropes to form an enclosed volume for fish farming.

Mooring lines arranged in the longitudinal direction to tighten the construction in the longitudinal direction of the fish farming structure. These mooring lines may be attached to one or more buoys, preferably at least one buoy at each end of the fish farming structure, to provide the mooring system with sufficient tension in horizontal direction in order to provide the necessary horizontal stiffness in the fish farming structure. Hence, the longitudinal mooring lines will also provide tension to the system in the longitudinal direction ensuring that the volume is kept in shape. The buoys are preferably connected to the frame structures at each end of the fish farming structure with a plurality of ropes.

In the transverse direction of the fish farming structure, it is moored by using transverse mooring lines from each frame structure, i.e. first and second support devices and any additional support device, there is preferably, but not necessarily, provided transverse mooring lines for each support device, typically a pair of transverse mooring lines for each support device that is provided with transverse mooring lines. The transverse mooring lines are independently moored, i.e. the transverse mooring lines that moor each of the frame structures are not connected to any of the other transverse mooring lines. The transverse mooring lines are preferably moored to the seabed and provides transverse stiffness to the structure. The support devices are preferably moored by the use of catenary mooring lines of steel chain and drag-anchors.

The support devices provide the necessary buoyancy to the fish farming structure and are designed to be hydrostatically stable by providing the lower part of the support devices with ballast tanks. Flooding or ballasting the ballast tanks will provide the fish farming structure with the necessary buoyancy at any time. In this way the buoyancy can be controlled, and the support devices can be regulated such that they lie in the surface and such that there is a free water surface for the fish over at least a region within the fish farming structure.

The support devices are preferably divided into water tight compartments to ensure that the support devices are redundant in case of an unintended flooding. To carry variable loads such as fodder, ice, snow, marine growth etc. the support devices will preferably be designed to have reserve buoyancy.

The net structure may be made up of a longitudinal net structure and two transverse net structures, one at either end of the fish farming structure. A longitudinal net structure comprises a longitudinal rope structure and the longitudinal mesh net that is attached to the longitudinal rope structure, and is attached to the support devices, for example by using pre-fabricated connection points or lines arranged on the support devices to which for example loops provided at the end of the ropes can be hooked up. The support devices can also facilitate for hatches and technical rooms that are necessary for operation and maintenance of the fish farming structure. The support devices can also be designed to contain fodder systems and systems for handling dead fish.

The longitudinal rope structures arranged between adjacent support devices are preferably arranged so that they have a hyperbolic spatial structure. The purpose of the longitudinal rope structure is to have a flexible connection between the frames and obtain a downward slope toward the frame structure for gathering the dead fish.

The main philosophy for the concept has been to design an ocean fish farming structure that is a large and elongated floating structure where a set of support devices are capable of moving flexibly and respond independently to first order wave loads due to the flexibility in the system and interact for stationary or slowly-varying loads.

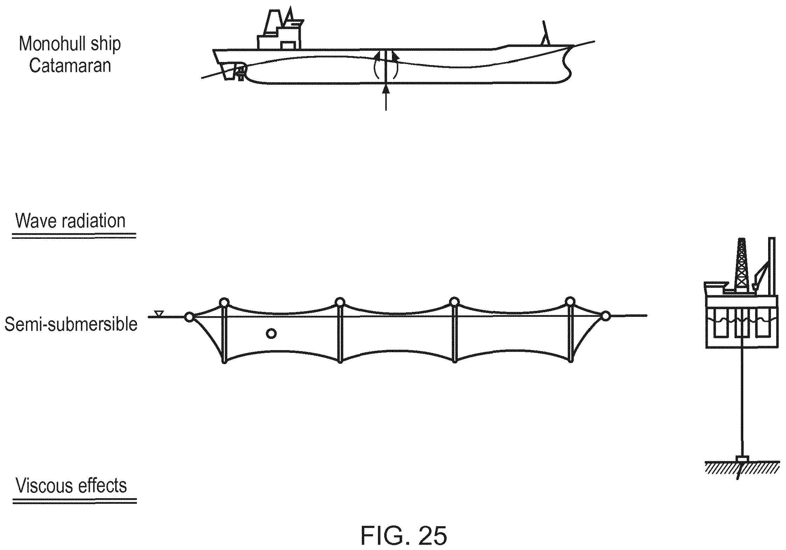

The philosophy is contrary to the design of ships, see figure 25, which are reinforced to sustain the loads and moments from waves, and thereby counteract deformations due to the wave motions. A minimum internal deformation of the structure is thereby obtained.

In the following an idealized structure with individual support devices which support a flexible system of net structure that forms a large underwater volume. The net structure comprises a rope structure and a mesh net connected to the rope structure. For this idealized structure with no transfer of dynamic loads between the individual support devices, the support devices can be designed by considering the local response only. To achieve such a structure the volume must be enclosed in a way that ensures a flexible connection for all combination of rigid body motions for the individual frames.

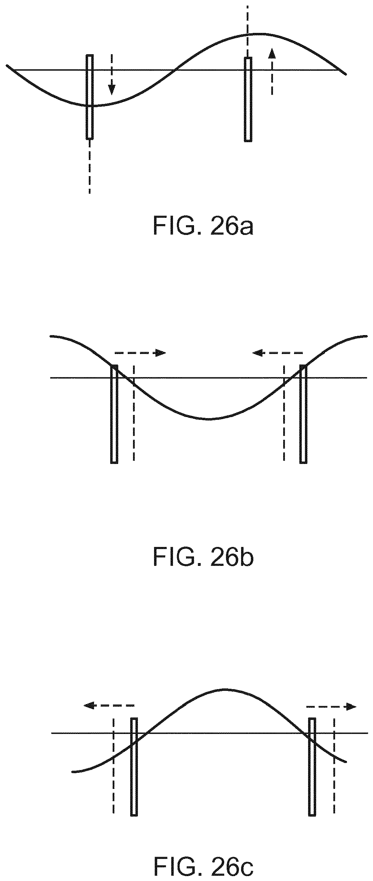

An illustration of the principle is given in figures 26a-c where the movements of two independent frame structures are illustrated. Figure 26a shows independent vertical movement of the two frame structures, figure 26b shows independent movements of the frame structures towards each other and figure 26c shows independent movements of the frame structures away from each other.

To achieve this flexibility, it is necessary to the design a net structure which is flexible during wave action for both compressive and tensile loads. To be able to do this the mooring system needs to comprise flexible/catenary mooring lines. Because the net structure is designed to be unable to carry compressive loads the flexibility is obtained for all cases where the support devices are moving towards each other. For the case where the frame structures are moving away from each other, it is the vertical deformation due to the viscous wave forces on the net structure that contributes to the flexibility. The vertical deformation significantly increases the flexibility in the system as the tensile stiffness is reduced, which simplified can be thought of as two springs in series and therefore dominated by the spring with the lowest stiffness.

Viscous wave forces act on the net structure in the same direction as the wave particle velocity, thus causing deflection of the net structure. The infinitesimal viscous force along an infinitesimal rope or net segment can be approximated by:

$$dF = \frac{1}{2}\rho C_D D \vec{u}|\vec{u}| \, dL$$

where $D$ denotes the net or rope diameter, $u$ the wave particle velocity, $C_D$ the drag coefficient for the cross section, $dL$ the unit length and $dF$ the force.

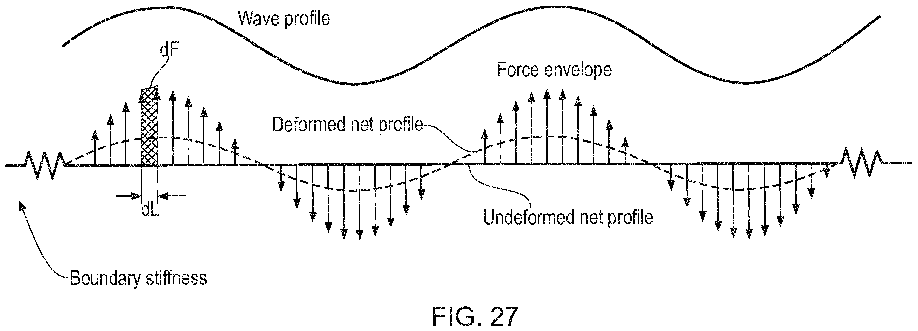

The deflection of the net structure caused by the viscous wave forces will decrease the tensional stiffness of the net structure, thus causing the connection between the frames to be flexible for these actions. This is illustrated in figure 27 where reduced horizontal stiffness as a result of viscous wave forces on the net structure.

The phenomenon is comparable to the stiffness reduction appearing for a catenary. For details on the catenary equation and principle, see for example chapter 8 in Sea Loads on Ships and Offshore Structures, Faltinsen, 1990.

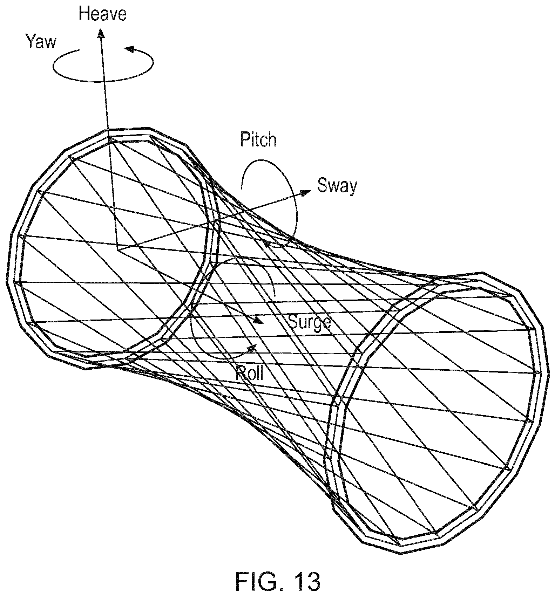

The structure that has been developed from the basic idea, preferably has a shape that is similar to a fish trap. The connections between the frame structures provides negligible global bending stiffness and shear stiffness. Shear forces, bending moments and torques will therefore not be transferred between the frame structures. A flexible connection between frame structures for sway, heave and roll motions is thereby ensured. For surge pitch and yaw motions, the horizontal stiffness when the structure is exposed to waves will be substantially reduced. This is contrary to a state where the net structure is made of straight ropes. The various motions of the present fish farming structure are shown in the attached figure 13.

The eigen modes of the stiff-bodies in a wave frequency domain will lead to translation or rotation of the frame structures. The integrity of the structure is taken care of by dimensioning of ropes that can withstand forces from wave loads that coincides with these eigen modes. In calculations it has been shown that damping in the net structure and the frame structures is considerable, which is something that contributes to that the response from resonant motions are not a dimensioning problem for the global fish farming structure.

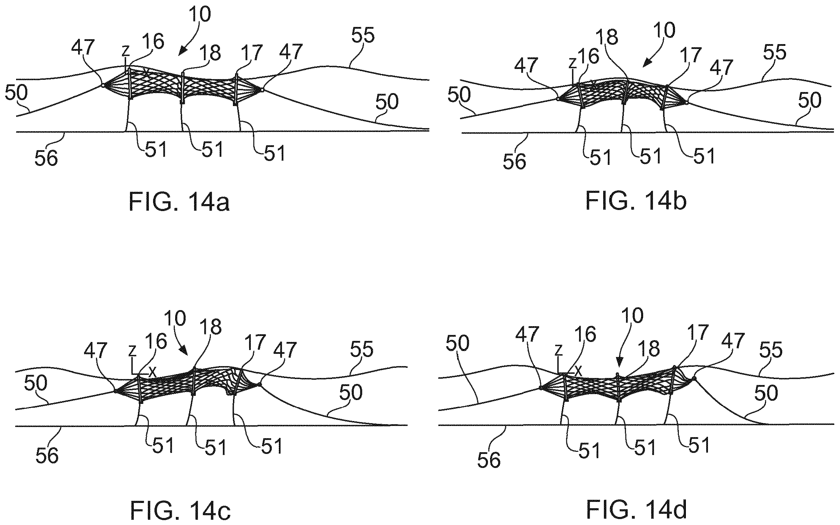

Knowledge from the design of floating platforms in the North Sea and the design principles behind semi-submersible designs may also be used with the fish farming structure. The main principle behind a semi-submersible is a low water plane area to lift the heave eigen mode above the wave frequency domain and to ensure low first order wave forces - undisturbed wave pressure follow $e^{kz}$, where z is vertical axis, defined upwards, and k is the wave number $k=\omega^2/g$ in deep water. If the vertical motions in the fish farming structure become too large because the damping in the system is too little, this principle may be used in the design of the frame structures of the fish farming structure. This may for example be achieved by slimming the frame structures in the area around the water line, i.e. the water surface, and thereby reduce the water plane area. The principal mode of operation of the fish farming structure in regular waves of 25 meters is shown in figures 14a-d.

Streams of water and wind is assumed to be stationary loads and the loads on the rope structure will be dominated by this load regime. The loads from the net structure will be transferred as tension in the ropes in the rope structure that will cause a displacement of the frame structure and thereby an increased tension in the mooring lines. Stationary loads in the longitudinal direction will be more or less independent of the length of the fish farming structure. The reason for this is that the water velocity is reduced to a negligible size along the fish farming structure by the end of one segment. Ref: Current forces on, and water flow through and around, floating fish farms, Geir Loland 1993.

Because of the design of the fish farming structure, the mooring system and the way the fish farming structure works, the fish farming structure will preferably be made modular. This opens up for the extension of the fish farming structure in the longitudinal direction at a later stage without strengthening of the ropes of the rope structure and the mooring lines that works in the longitudinal direction of the fish farming structure, with the exception of a possibly increased pretensioning in the longitudinal direction.

With extension of the fish farming structure it is meant that an extra frame structure and an extra net structure with ropes and a mesh net, is included and connected to an existing frame structure, for example at the end of the fish farming structure. The extra frame structure is preferably, but not necessarily, moored to the sea bed with two mooring lines in the same way as described above for the existing frame structures.

The reason that an extension of the fish farming structure is possible with only a negligible increase of forces from waves is that the support devices are flexibly connected, and that the wave forces act substantially locally on each support device construction, rope structure or mesh net. Modularity for stationary forces is achieved with a separate/independent transvers mooring to the seabed of each or some of the support devices.

Hence, it is provided a fish farming structure comprising at least a first support device and a second support device, and a net structure that extends between the first support device and the second support device and forms an enclosure between the first support device and the second support device, and wherein the first support device and the second support device are independently moored and wherein the net structure is elastic.

The fish farming structure will typically be used for farming of fish and/or other sea creatures. For example, the fish farming structure is suitable for farming of salmon since the fish farming structure can provide a free water surface, which the salmon prefer.

The fish farming structure preferably comprises at least one longitudinal mooring line that is attached to the first support device and at least one longitudinal mooring line that is attached to the second support device. The longitudinal mooring lines provide longitudinal mooring stiffness in a longitudinal direction of the fish farming structure. One or more than one or all the longitudinal mooring lines may be catenary shaped. For example, the mooring lines may be catenary mooring lines of steel chain and drag-anchors.

Furthermore, the at least one longitudinal mooring line that is attached to the first support device, and the at least one longitudinal mooring line that is attached to the second support device, may be arranged so that they provide longitudinal mooring stiffness in a longitudinal direction of the fish farming structure and transverse mooring stiffness in a transverse direction of the fish farming structure. This can be achieved by arranging the at least one mooring line that is attached to the first support device, and the at least one longitudinal mooring line that is attached to the second support device, so that they are non-parallel with the longitudinal centre line of the fish farming structure.

The first support device preferably comprises at least two transverse mooring lines that are attached to the first support device on opposite transverse sides of the first support device. The second support device preferably also comprises two transverse mooring lines that are attached to the second support device on opposite transverse sides of the second support device. One or more than one or all the transverse mooring lines may be catenary shaped. For example, the mooring lines may be catenary mooring lines of steel chain and drag-anchors.

The net structure may be made in various ways. One embodiment of the net structure could be a one-piece net structure that is arranged over the first support device and the second support device and any additional support device that is arranged between the first support device and the second support device, and is fastened to the support devices, such that the net structure forms a closed space between the first support device and the second support device, including the longitudinal openings through the first and second support devices, so that any fish that is kept in the closed space is unable to escape from the fish farming structure. As an alternative, instead of arranging the one-piece net structure over the support devices, the net structure may also be passed through the axial, through-going opening of the support devices and be attached to the inner side of the support devices.

Alternatively, the net structure may comprise at least one longitudinal net structure that extends between the first support device and the second support device and is attached to the first support device and the second support device. The net structure preferably also comprises at least two transverse net structures that are attached to the first support device and the second support device respectively such that the fish farming structure is closed off in the longitudinal direction of the fish farming structure at the first support device and the second support device.

The net structure is preferably provided with a curved shape between the first support device and the second support device so that a cross-sectional area of the fish farming structure perpendicular to a longitudinal axis of the fish farming structure gradually decreases from the first support device and from the second support device towards a position halfway or about halfway between the first support device and the second support device where the fish farming structure has a minimum cross-sectional area. The net structure can for example be provided with a hyperbolic shape between the first support device and the second support device.

The net structure may be substantially hyperbolically shaped around a longitudinal centerline of the fish farming structure between two adjacent support devices.

Furthermore, each longitudinal net structure may comprise a plurality of ropes that are attached to two adjacent support devices forming a rope structure between the two adjacent support devices. Preferably, each rope follow a path between the two adjacent support devices that is substantially a straight line.

Hence, the net structure may comprise a plurality of ropes that are attached to the first support device and to the second support device forming a rope structure between the first support device and the second support device, where the ropes form a rope structure that is substantially hyperbolically shaped around a longitudinal centerline of the fish farming structure.

In a further embodiment, the ropes of a first half of the ropes arranged between two adjacent support devices follow respective paths that are substantially straight lines and with an inclination relative to the two adjacent support devices, and the ropes of a second half of the ropes, arranged between the same two adjacent support devices, follow respective paths that are substantially straight lines and with an inclination relative to the two adjacent support devices, but in opposite directions around the longitudinal centerline of the fish farming structure.

Preferably, the inclination of the first half of the ropes relative to the two adjacent support devices is substantially equal to the inclination of the second half of the ropes relative to the two adjacent support devices. That means that the first half of the ropes preferably are provided with a positive slope/gradient of +m while the second half of the ropes are provided with a slope/gradient of -m. Furthermore, the first half of the ropes are preferably evenly distributed around the circumference of the fish farming structure and similarly the second half of the ropes are preferably evenly distributed around the circumference of the fish farming structure. Alternatively, arranging the ropes in curved paths about the longitudinal centerline of the fish farming structure with substantially the same slope would be possible.

The net structure preferably comprises at least one mesh net. The at least one mesh may be attached to the ropes and the mesh net may be further attached to the first support device and to the second support device.

If the net structure is provided with at longitudinal and transverse net structures, each longitudinal net structure preferably comprises a mesh net that is attached to the rope structure of the longitudinal net structure.

Furthermore, if the net structure is provided with at longitudinal and transverse net structures, each transverse net structure preferably comprises a mesh net that is attached to the rope structure of the transverse net structure.

In an embodiment of the fish farming structure, the ropes may be fiber ropes made of a non-metallic material.

In an embodiment of the fish farming structure, the ropes may be made of a plastic material, for example of nylon, i.e. the ropes are nylon ropes.

The fish farming structure may further comprise at least one additional support device that is arranged between the first support device and the second support device. The fish farming structure may comprise one additional support device, two additional support devices or any other number of additional support devices.

If the fish farming structure is provided with one or more additional support device arranged between the first support device and the second support device, the fish farming structure further comprises at least one additional longitudinal net structure arranged such that the fish farming structure comprises a longitudinal net structure that extends between first support device and the additional support device and a longitudinal net structure that extends between the additional support device and the second support device, whereby a continuous enclosure is formed between the first support device and the second support device. The number of additional longitudinal net structures will preferably correspond to the number of additional support devices that the fish farming structure is provided with.

Furthermore, if the fish farming structure is provided with one or more additional support device arranged between the first support device and the second support device, the fish farming structure may optionally be provided with at least two transverse mooring lines that are attached to the at least one additional support device on opposite transverse sides of the first support device.

The fish farming structure may also comprise at least one additional transverse net structure that is attached to the at least one additional support device such that the fish farming structure is closed off in the longitudinal direction of the fish farming structure at the at least one additional support device

The net structure may further comprise at least two transverse mesh nets that are attached to the first support device and the second support device respectively. Each of the at least two transverse mesh nets are preferably attached to the first support device and the second support device respectively, such that the first and second support devices are closed in the longitudinal direction of the fish farming structure. The transverse mesh nets will close off the fish farming structure and prevent fish that is kept in the fish farming structure, from escaping.

The first support device, the second support device and any additional support device preferably comprises at least two transverse mooring lines, i.e. a pair of mooring lines, for each support device where each pair of mooring lines are attached to the first support device, the second support device and any additional support device respectively on opposite transverse sides of first support device, the second support device and the additional support device or devices if the fish farming structure is provided with any.

The additional net structure or structures may further comprise an additional transverse mesh net that is attached to the additional support device. The additional transverse mesh net is preferably attached to the additional support device such that the additional support device is closed off in the longitudinal direction of the fish farming structure. The additional transverse mesh nets will divide the fish farming structure into two or more compartments in the fish farming structure which will be useful in case a hole is formed in the net structure of the fish farming structure since one more compartments will still be intact, and escape of all fish is prevented.

The first support device and the second support device and all additional support devices, if the fish farming structure is provided with any, is or are preferably "doughnut-shaped", i.e. the first, second and any intermediate support device are preferably closed ring-shaped or polygonally shaped structures in a cross-section perpendicular to a longitudinal section of the fish farming structure.

A few non-limiting embodiments of the fish farming structure will now be described with reference to the figures where:

Figure 1 illustrates a perspective view of an embodiment of a part of the fish farming structure including two support devices and a net structure with the ropes and the mesh net that is attached to the ropes and the two support devices.

Figure 2 illustrates a support device of the fish farming structure according to the present invention.

Figure 3 illustrates a detail of the support device of the fish farming structure showing the attachment of the ropes of the net structure to the support devices.

Figure 4 illustrates a front view of a support device including the ropes of the rope structure that connects two adjacent support devices.

Figure 5 illustrates a perspective view of an embodiment of a fish farming structure according to the present invention where the fish farming structure comprises four support devices and is shown with the rope structure but without the mesh net.

Figure 6 illustrates a side view of the embodiment of the fish farming structure shown in figure 5.

Figure 7 illustrates a top view of the embodiment of the fish farming structure shown in figures 5-6.

Figure 8 illustrates a front view of the embodiment of the fish farming structure shown in figures 5-7.

Figure 9 illustrates a perspective view of an embodiment of a fish farming structure according to the present invention where the fish farming structure comprises three support devices and is shown with the rope structure but without the mesh net.

Figure 10 illustrates the embodiment of the fish farming structure shown in figure 9 including transverse rope structures that are attached to respective first and second support devices, but without transverse mooring lines

Figure 11 illustrates the embodiment of the fish farming structure shown in figures 2 and 3 from a different angle of view and including the mesh net.

Figure 12 illustrates in more detail a support device according to the present invention.

Figure 13 illustrates the different degrees of freedom of the fish farming structure in water.

Figure 14a-d illustrates a sequence of four snapshots of four stages of a possible motion a fish farming structure with three support devices and a net structure interconnecting the support devices, undergoes as a large wave (about 25m) is passing by the fish farming structure.

Figure 15a illustrates a simulation model of a fish farming structure with a flexible mooring according to the present invention.

Figure 15b illustrates the fish farming structure in figure 15a with a rigid mooring.

Figure 16 illustrates the strain/tension relationship of the mooring ropes in the simulation models, typical for dyneema rope material.

Figure 17 illustrates the result of the simulation where the difference in tension in the mooring ropes in a flexibly moored fish farming structure as shown in figure 15a, and a rigidly moored fish farming structure as shown in figure 15b, is indicated.

Figure 18 illustrates a number of simulations indicating the stiffness sensitivity of the fish farming structure with the same model build up as in shown in figures 15a and 15b with a varying rigidity of the mooring.

Figure 19 illustrates the fish farming structure with a dead fish pouch in which dead fish can be collected.

Figure 20 illustrates the fish farming structure with a dead fish pouch as shown in figure 19 with a system for collecting and treating the dead fish.

Figure 21 illustrates the fish farming structure with transverse net structures.

Figure 22 illustrates the fish farming structure with transverse net structures where the transverse net structure of the additional support device is provided with an opening.

Figure 23 illustrates an alternative shape of the support devices where the support devices are substantially U-shaped.

Figure 24 illustrates a possible configuration of the fish farming structure.

Figure 25 illustrates a ship and a fish farming structure according to the present invention.

Figure 26a-c illustrates the movements of two independent frame structures.

Figure 27 illustrates the result of viscous wave forces on the net structure.

It should be noted that the net structure 20, 38, 58 of the fish farming structure 10 according to the present invention is designed to be, for all practical purposes, incapable of transferring bending moments and torsional moments between two adjacent support devices 15, 16, 17, 18, 19. Furthermore, with this net structure 20, 38, 58, the fish farming structure 10 is designed such that the various rigid elements of the fish farming structure, i.e. the first and second support devices 16, 17 and any intermediate or additional support device 18, 19 that may be comprised in the fish farming structure 10, are relatively free to move relative to each other. In this way the fish farming structure 10 will be capable of withstanding strong winds and large wave motions that occurs in exposed sea regions.

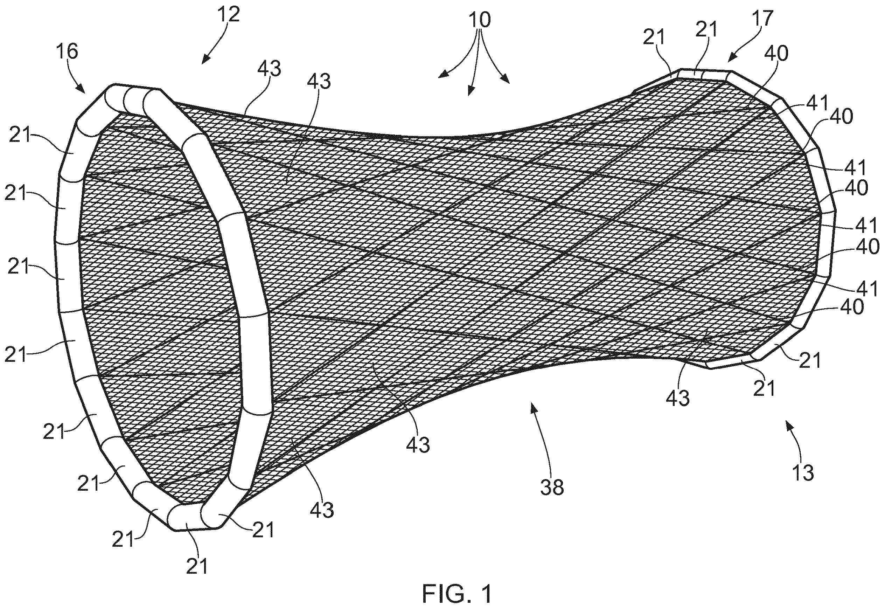

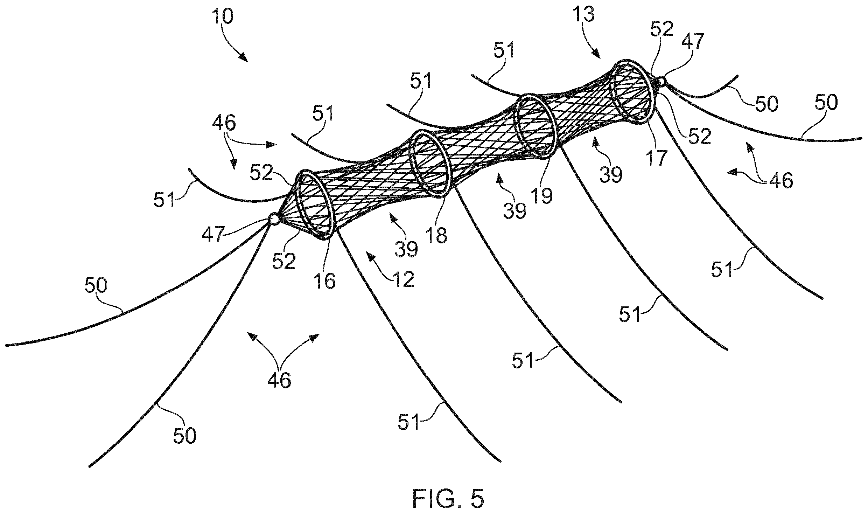

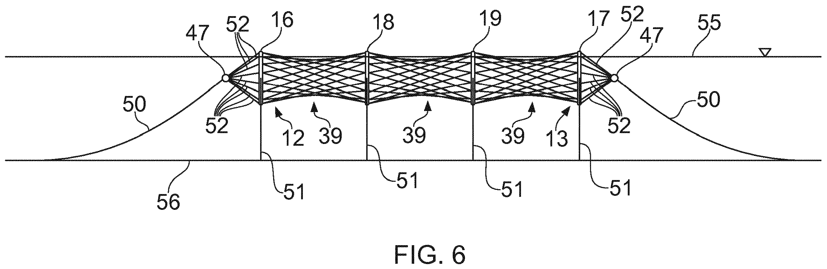

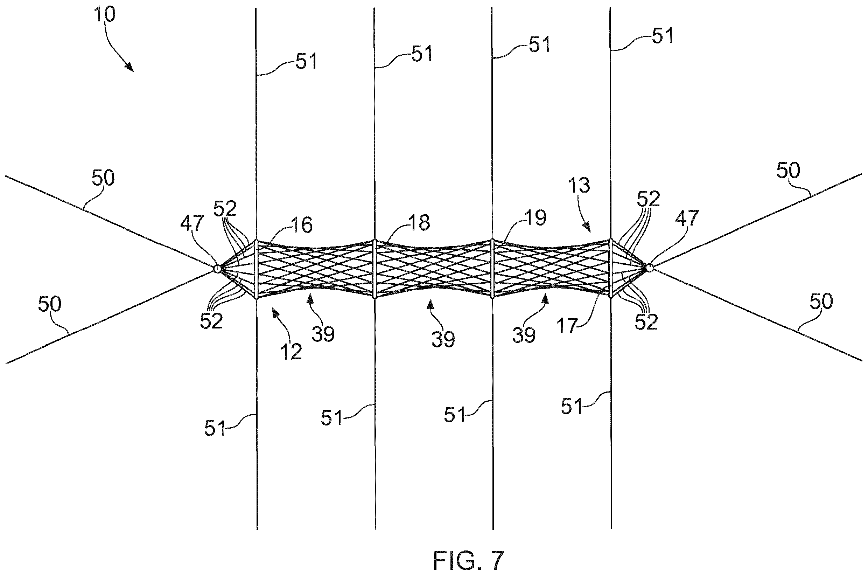

In figure 1, a fish farming structure 10 according to the present invention is shown. The fish farming structure 10 comprises a first support device 16 and a second support device 17. The first support device 16 is provided at a first end 12 of the fish farming structure 10 while the second support device 17 is provided at a second end 13 of the fish farming structure 10. Between the first support device 16 and the second support device 17, one or more additional support devices 18, 19 may be included as indicated in figures 5-7, 9-11 and 14a-d.

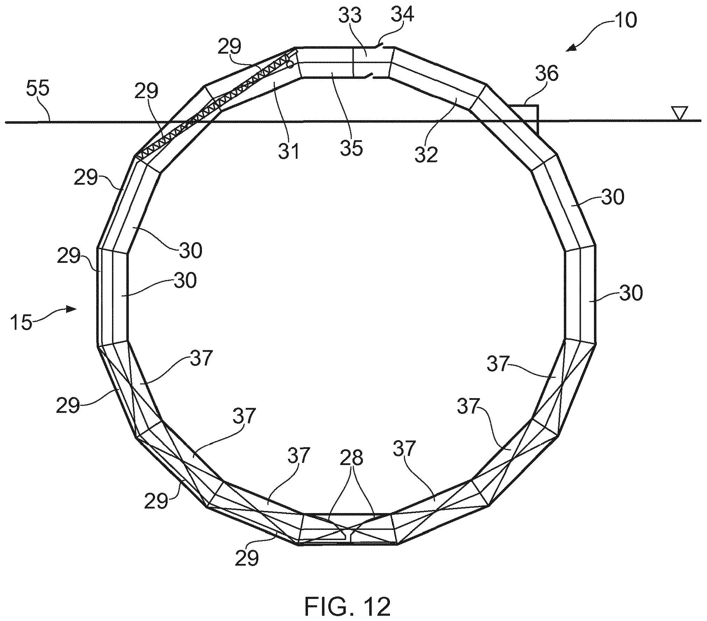

The first support device 16, the second support device 17 and any additional support device 18, 19 provide the necessary buoyancy to the fish farming structure 12 and are preferably designed to be hydrostatically stable by providing the lower part of the support devices 16, 17, 18, 19 with at least one, but preferably a plurality of ballast tanks 37 as indicated in figure 12. With the ballast tanks 37, draft of the support devices 16, 17, 18, 19 can be controlled and the they can be regulated such that they lie in the surface 55 and such that there is a free water surface for the fish over at least a region within the fish farming structure 10.

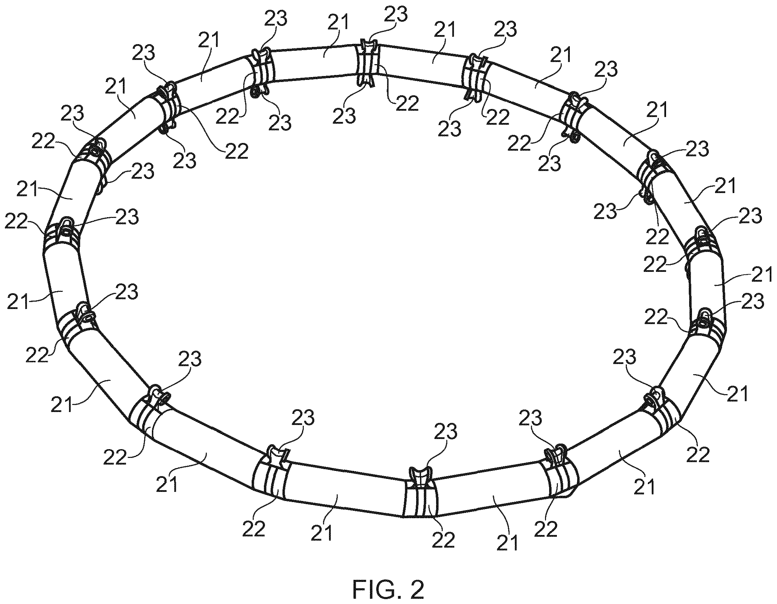

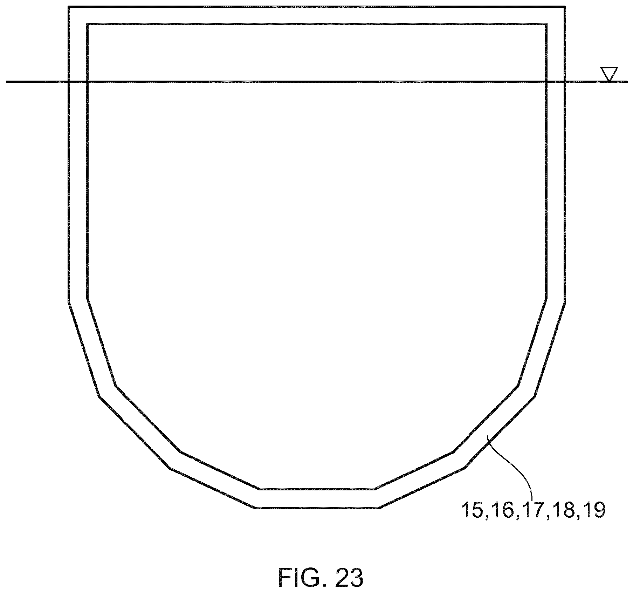

The support devices 16, 17, 18, 19 may be given a circular shape, i.e. a torus shape like a ring doughnut, but a more convenient shape from a manufacturing perspective is to give the doughnut shape a polygonal shape as clearly indicated in figures 2 and 12. The support devices 16, 17, 18, 19 may alternatively be given other shapes, such as a U-shape as shown in figure 23, or any other suitable shape. The support device 16, 17, 18, 19 shown in these two figures is made of a plurality of support device elements 21 connected to each other with connecting elements 22. The support device elements 21 are preferably made of pipe sections with a circular cross section perpendicular to the longitudinal axis of the respective pipe sections. The support device elements 21 and the connecting elements 22 are preferably made of steel and welded to each other to form a polygonally shaped support devices 16, 17, 18, 19 as indicated in figure 2 and 12.

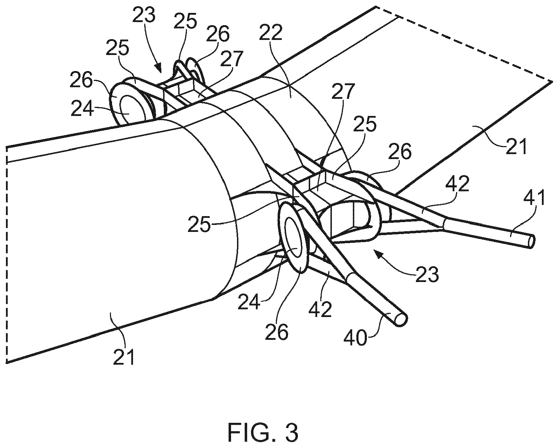

In figure 3 there is shown a more detailed view of a connecting element 22. The connecting elements 22 are preferably provided with at least one rope attachment unit 23, but preferably two rope attachment units 23 as indicated in figure 3. The rope attachment units 23 are used for attachment of ropes 40, 41 of a rope structure 39 that interconnects two adjacent support devices 16, 17, 18, 19. The rope attachment units 23 can also be used for attachment of buoy connecting lines 52 of the mooring system 46 of the fish farming structure 10.

A rope attachment unit 23, as shown in figure 3, comprises a support element 27 and two bolt elements 24 arranged on either side of the support element 27 projecting out from the support element 27. Alternatively, it would also be possible to provide the support element 27 with a through-going hole and arranging a single bolt element 24 in that through-going hole so that it projects out from the support element 27 on either side.

On the bolt elements 24 there is attached an inner flange element 25 and an outer flange element 26. The inner flange element 25 and the outer flange element 26 are spaced apart with a suitable distance in the axial direction of the bolt elements 24 so that a rope attachment member 42 fits nicely between the space between the inner flange 25 and the outer flange 26. The distance between the inner flange 25 and the outer flange 26 is therefore slightly larger than the diameter of the rope attachment member 42.

The rope attachment member 42 is loop-shaped and may be a separate loop-shaped attachment member 42 that is securely attached to the first rope 40 or the second rope 41 of the rope structure 39, or to a transverse mooring line 51 or a buoy connecting line 52 of the mooring system 46. Alternatively, the loop-shaped member 42 may be formed by bending the ends of the first rope 40 and the second rope 41 of the rope structure 39 and the transverse mooring line 51 and the buoy connecting line 52 of the mooring system 46 into a loop and attaching the ends to the respective ropes 40, 41, 51, 52 themselves.

One possible design of the rope attachments units 23 is shown in figure 3, but a person skilled in the art would of course realize that there are many other possible ways of designing such rope attachment units.

In figure 12 there is shown a support device 15 in general. It should be noted that the first support device 16, the second support device 17 and any additional support device 18, 19 that the fish farming structure 10 is provided with, is preferably designed as the support device 15 including some or all the features shown in figure 12.

The support device 15 comprises a plurality of support device elements 21 as also shown in figure 2, that are connected to each other so that a polygonally shaped torus, i.e. doughnut shaped, support device 15 is formed. The support device elements 21 may be provided with one or more features. As shown in figure 12, the support device 15 may be provided with a collector device 28 that collects dead fish that sinks and end up at the lowest part of the support device 15 due to the rope structure 39 between two adjacent support devices 16, 17, 18, 19 preferably being arranged so that it has a hyperbolic spatial structure as indicated in the figures. The collector device is connected to a transport pipe through which the dead fish, and debris of any kind that is collected in collector device 28, can be transported to the top of the support device 15 where it may be easily removed and transported onshore by a vessel.

Preferably, one or more of the support elements 21 at the lower part of the support device 15 are provided with ballast tanks 37. By regulating the amount of water in the tanks 37 the extent to which the support device 15 is submerged can be adjusted to a desired level. The upper part of the support device 15 may be arranged above the surface 55 of the water which simplifies access to the support device 15 for personnel and provides some free space for the fish to jump above the water, that for example salmon likes to do. The support device 15 may be provided with a quay 36 for a vessel as indicated in figure 12, and one or more entrances, i.e. doors, hatches or the like, for access to the engine room 35 and other parts of the interior of the support device 15. The support device 15 may also be provided with at least one silage tank 31 and at least one sludge tank 32 as shown in figure 12. The support device preferably also comprises at least one feed tank 30 for storage of fish fodder. These are some of the features that may be included in the support device 15, but there are of course other features not mentioned here that may also be included.

The fish farming structure 10 comprises a net structure 20 that encloses a space for the fish. The net structure 20 may be made in various ways. One embodiment of the net structure 20 could be a one-piece net structure that is arranged over the first support device 16 and the second support 17 device and any additional support devices 18, 19 that is arranged between the first support device 16 and the second support device 17, and is fastened to the support devices 16, 17, 18, 19, such that the net structure 20 forms a closed space between the first support device 16 and the second support device 17, including the longitudinal openings through the first and second support devices 16, 17, so that any fish that is kept in the closed space is unable to escape from the fish farming structure 10.

Alternatively, the net structure 20 may comprise at least one longitudinal net structure 38 that extends between the first support device 16 and the second support device 17 and is attached to the first support device 16 and the second support device 17. If the fish farming structure 10 is provided with one or more additional support devices 18, 19, the net structure 20 preferably comprises a number of longitudinal net structures 38 where each longitudinal net structure extends between two adjacent support devices 15, 16, 17, 18, 19. The net structure 20 preferably also comprises at least two transverse net structures 58 that are attached to the first support device 16 and the second support device 17 respectively such that the fish farming structure 10 is closed off in the longitudinal direction of the fish farming structure 10 at the first support device 16 and the second support device 17.

The longitudinal net structure 38 comprises a longitudinal rope structure 39 as shown in figures 5-7, 9-10 and 14a-d, and a longitudinal mesh net 43. The longitudinal mesh net 43 is preferably attached to the longitudinal rope structure 39, either on top of the longitudinal rope structure 39 or below the longitudinal rope structure 39, i.e. on the inside of the longitudinal rope structure.

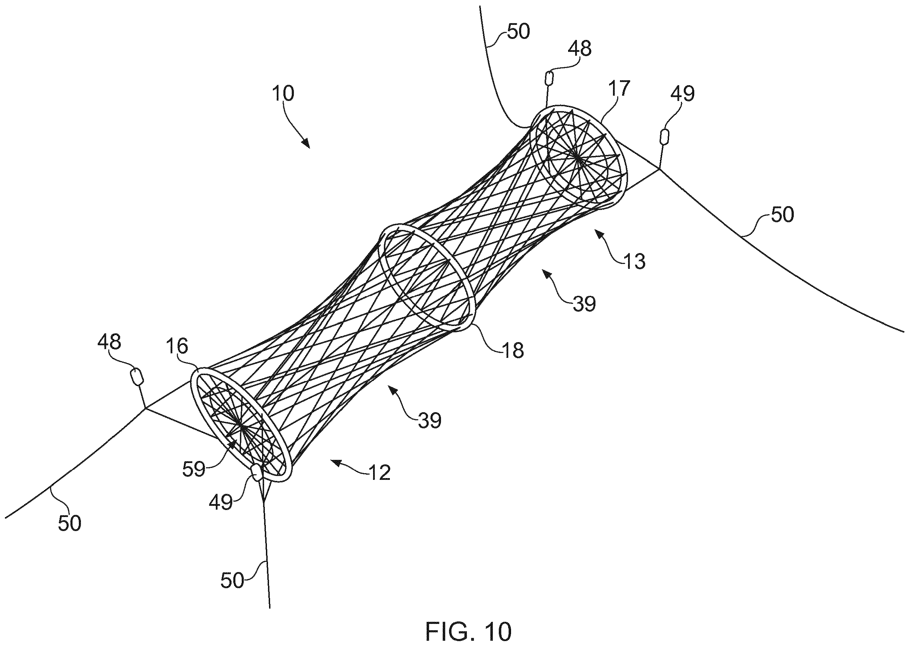

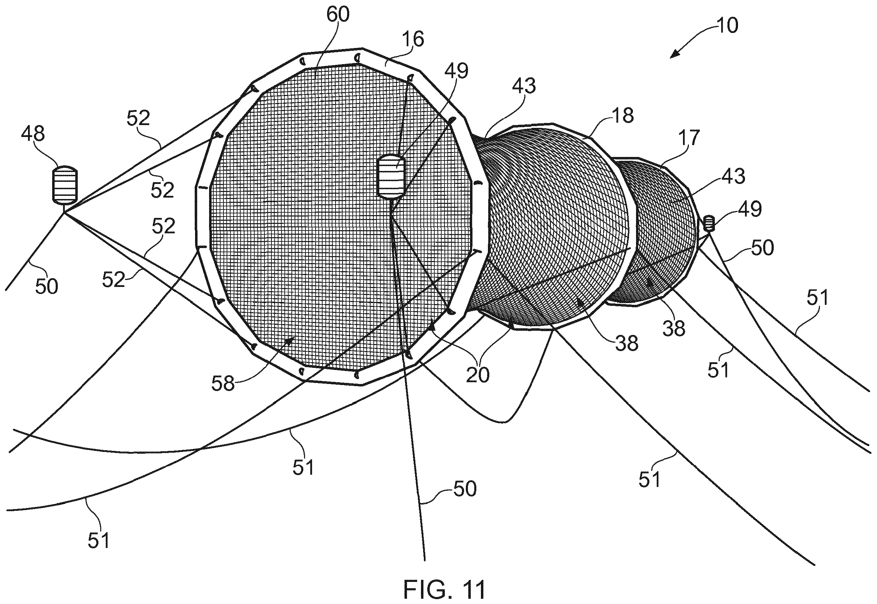

The net structure 20 further comprises a transverse net structure 58 that comprises a transverse rope structure 59, as shown in figure 10, and a transverse mesh net 60, as shown in figure 11, that is attached to the transverse rope structure 59. The transverse rope structure 59 and the transverse mesh net 60 are arranged within and covers the through-going opening in the longitudinal or axial direction of the (polygonally) shaped torus of the support device 16, 17, 18, 19 and are attached to the inside of support devices 16, 17, 18, 19. Both the first support device 16 and the second support device 17 of the fish farming structure 10 is provided with a transverse rope structure 59 and a transverse mesh net 60. The two transverse net structures 58, each including a transverse rope structure 59 and a transverse mesh net 60, thereby closes the fish farming structure 10 in the axial direction of the fish farming structure. In addition, if the fish farming structure 10 is provided with one or more additional support devices 18, 19, one, some or all the additional support devices 18, 19 may be provided with a transverse net structure 58 comprising a transverse rope structure 59 and a transverse mesh net 60. The fish farming structure 10 is thereby divided into two or more separate compartments for the fish. An advantage of dividing the fish farming structure 10 into several separate compartments is that in case the fish farming structure 10 is damaged by vessels or bad weather, only fish in the damaged compartment will escape while fish in undamaged compartments will remain in the fish farming structure 10.

The longitudinal rope structures 39 of the longitudinal net structures 38 are shown in figures 5-7, 9-10 and 14a-d. Each longitudinal rope structure 39 comprises a plurality of ropes 40, 41 that interconnects two adjacent support devices 16, 17, 18, 19 as clearly shown in the figures. The longitudinal rope structure 39 between the two adjacent support devices 16, 17, 18, 19 are preferably arranged so that it has a hyperbolic spatial structure.

Furthermore, each longitudinal rope structure 39 comprises a plurality of ropes 40, 41 that are attached to two adjacent support devices forming a longitudinal rope structure between the two adjacent support devices 16, 17, 18, 19. As indicated in the figures, each rope 40, 41 follow a path between the two adjacent support devices 16, 17, 18, 19 that is substantially a straight line.

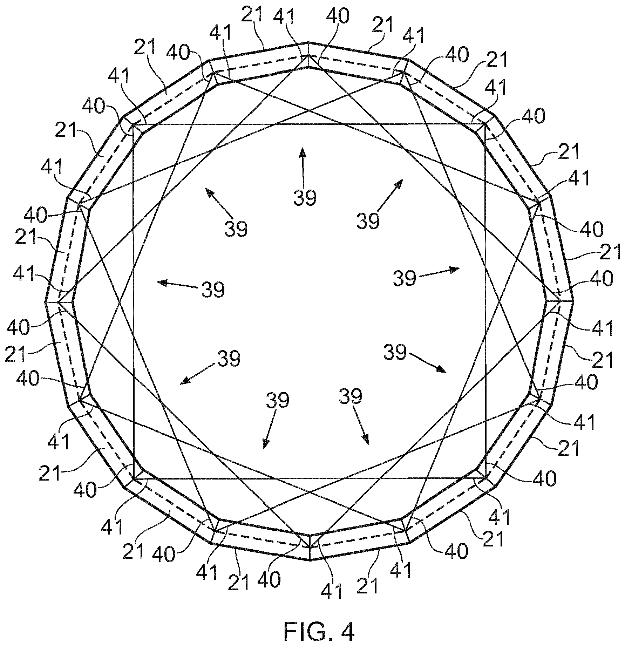

As shown in the figures, and particularly in figures 1 and 4, a plurality of first ropes 40 of the longitudinal rope structure 39 are arranged between the two adjacent support devices 16, 17, 18, 19, for example the first support device 16 and the second support device 17 as shown in figure 1, so that they form an angle that is less than 90 degrees with a plane that is perpendicular to the longitudinal centre axis of the fish farming structure 10, i.e. a plane through the first support device 16 or the second support device 17 that is perpendicular to the longitudinal centre axis of the fish farming structure 10. A plurality of second ropes 41 are further arranged between the first support device 16 and the second support device 17 so that they form angle that is less than 90 degrees with a plane that is perpendicular to the longitudinal centre axis of the fish farming structure 10, i.e. a plane through the first support device 16 or the second support device 17 that is perpendicular to the longitudinal centre axis of the fish farming structure 10, but in the opposite direction as compared to the first ropes 40. The plurality of first ropes 40 and the plurality of second ropes 41 are preferably following their substantially straight paths between two adjacent support devices 16, 17, 18, 19 with the same slope, i.e. if the first ropes 40 are arranged with a positive slope +m, the second ropes 41 will be arranged with a corresponding negative slope -m.

The number of first ropes 40 is preferably, but not necessarily, the same as the number of second ropes 41. The purpose of this longitudinal rope structure 39 is to have a flexible connection between the two adjacent support devices 16, 17, 18, 19 and obtain a downward slope toward the support devices 16, 17, 18, 19 for gathering of dead fish.

The fish farming structure 10 is further provided with a mooring system 46. The mooring system 46 comprises a number of transverse mooring lines 51. The first and second support devices 16, 17 are each provided with at least two transverse mooring lines 51 that are attached to either side of the first support devices 16 and the second support device 17 in a substantially transverse direction of the fish farming structure 10 relative to the longitudinal centre axis of the fish farming structure 10 and extending out from the first and second support devices 16, 17 in their respective transverse directions.

If the fish framing structure 10 is provided with one or more additional support devices 16, 17 arranged between the first support device 16 and the second support device 17, one, some or all the additional support devices 18, 19 may optionally be provided with at least two transverse mooring lines 51 arranged in the same way as the transverse mooring lines 51 of the first and second support devices 16, 17 as described above. For example figures 5-7 and 11 shows fish farming structures 10 that are provided with one and two additional support devices 18, 19 respectively where each additional support device 18, 19 is provided with two transverse mooring lines 51 arranged on either side of the fish farming structure 10, while figure 10 shows a fish farming structure 10 with an additional support device 18 that is not provided with any transverse mooring line 51.

The transverse mooring lines 51 may for example be catenary mooring lines of steel chain and drag-anchors. The transverse mooring lines 51 are preferably independently moored, i.e. the transverse mooring 51 lines that moor each of the support devices 16, 17, 18, 19 are not connected to any of the other mooring lines. The transverse mooring lines 51 may be moored to the seabed 56 and provides transverse stiffness to the fish farming structure 10.

The mooring system 46 is preferably further provided with mooring lines arranged in the longitudinal direction to tighten the construction in the longitudinal direction of the fish farming structure. These mooring lines preferably comprise buoy connecting lines 52 that are attached to one or more mooring buoys 47, 48, 49, preferably at least one mooring buoy 47, 48, 49 at each end of the fish farming structure 10, to provide the mooring system 46 with sufficient tension in horizontal direction in order to provide the necessary horizontal stiffness in the fish farming structure 10. One or more longitudinal mooring lines 50 are further attached to the mooring buoys 47, 48, 49 and further moored in a conventional manner. The longitudinal mooring lines may for example be catenary mooring lines of steel chain and drag-anchors or any other suitable anchoring system. Hence, the longitudinal mooring lines 50 will also provide tension to the fish farming structure 10 in the longitudinal direction ensuring that the volume is kept substantially in shape. The mooring buoys 47, 48, 49 are preferably connected to the frame structures at each end of the fish farming structure with a plurality of ropes. The mooring buoys 47, 48, 49 are preferably conventional mooring buoys and will not be further described here.

It should be mentioned that the net structure 20 in general, and the longitudinal net structures 38 described above in particular, are flexible during wave action for both compressive and tensile loads. To be able to do this the mooring system 46 preferably comprises flexible/catenary transverse mooring lines 51. Because the longitudinal net structures 38 are designed to be unable to carry compressive loads, flexibility is obtained for all cases where the first and second support devices 16, 17 and any additional support device 18, 19 that the fish farming structure 10 is provided with are moving towards each other. For the case where the first and second support devices 16, 17 and any additional support device 18, 19 that the fish farming structure 10 is provided with are moving away from each other, it is the vertical deformation due to the viscous wave forces on the longitudinal net structures 38 that contributes to the flexibility. The vertical deformation significantly increases the flexibility in the fish farming structure 10 as the tensile stiffness is reduced, which simplified can be thought of as two springs in series and therefore dominated by the spring with the lowest stiffness.

In figures 5-8 there is shown a fish farming structure 10 comprising the first support device 16 at the first end 12 of the fish farming structure 10 and the second support device 13 at the second end 13 of the fish farming structure 10. In addition, the fish farming structure 10 is provided with a first additional support device 18 and a second additional support device 19 that are both arranged between the first support device 16 and the second support device 17.

Between the first support device 16 and the first additional support device 18 there is provided a longitudinal net structure 38 (preferably a longitudinal net structure as shown in figure 1) that is attached to the first support device 16 and the first additional support device 18. For the sake of clarity, only the longitudinal rope structure 39 of the longitudinal net structure 38 is shown in figures 5-8.

Between the first additional support device 18 and the second additional support device 19 there is also provided a longitudinal net structure 38 (preferably a net structure as shown in figure 1) that is attached to the first additional support device 18 and the second additional support device 19. Again, for the sake of clarity, only the longitudinal rope structure 39 of the longitudinal net structure 38 is shown in figures 5-8.

Between the second additional support device 19 and the second support device 17 there is also provided a longitudinal net structure 38 (preferably a net structure similar to the net structure shown in figure 1) that is attached to the second additional support device 19 and the second support device 17. Again, for the sake of clarity, only the longitudinal rope structure 39 of the longitudinal net structure 38 is shown in figures 5-8.

Furthermore, at least the first support device 16 and the second support device 17 are both preferably provided with a transverse net structure 58. The transverse net structure 58 comprises a transverse mesh net 60, preferably a transverse mesh net as shown in figure 11, that is attached to a transverse rope structure 59, preferably a transverse rope structure as shown in figure 10. The transverse net structures 58 are attached to the first support device 16 and the second support device 17 respectively so that the fish farming structure 10 is closed at the first end 12 and the second end 13 of the fish farming structure 10. Other types of elements that is capable of closing the first and second ends 12, 13 of the fish farming structure 10 is also conceivable, for example solid plate elements made of steel, plastic or any other suitable material.

The fish farming structure 10 in figures 5-8 preferably comprises a mooring system 46 as described above. The support devices 16, 17, 18, 19 are all provided with at least two transverse mooring lines 51 that extend out from the support devices 16, 17, 18, 19 in opposite transverse directions of the fish farming structure 10.

The mooring system 46 further comprises buoy connecting lines 52 that are attached to the first support device 16 and the second support device 17 in one end and to two mooring buoys 47 arranged adjacent to the first end 12 and the second end of the fish farming structure 10 respectively. Each of the two mooring buoys 47 are further connected to one or more longitudinal mooring lines 50 that extend in a substantially longitudinal direction of the fish farming structure 10.

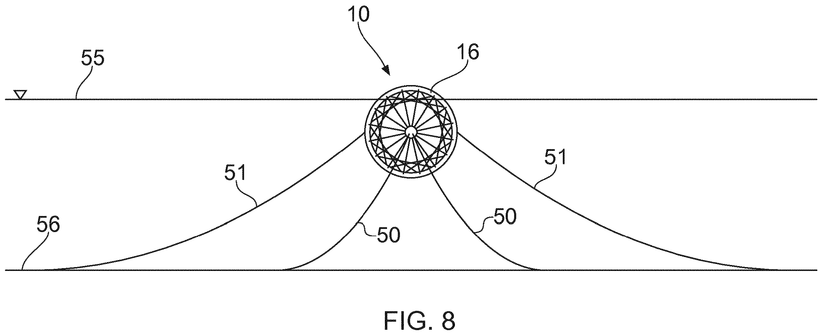

As can be seen in figure 8, the fish farming structure 10 is arranged partially submerged so that a relatively small portion of the support devices 16, 17, 18, 19 projects above the water surface 55. This is a preferable solution for all embodiments of the fish farming structure 10 and will ensure that at least a portion of the fish farming structure's enclosed space is above the water surface so that fish, such as salmon, have space to move or jump above the water surface 55. Obviously, the fish farming structure 10 may also be arranged in a completely submerged position if that is desired.

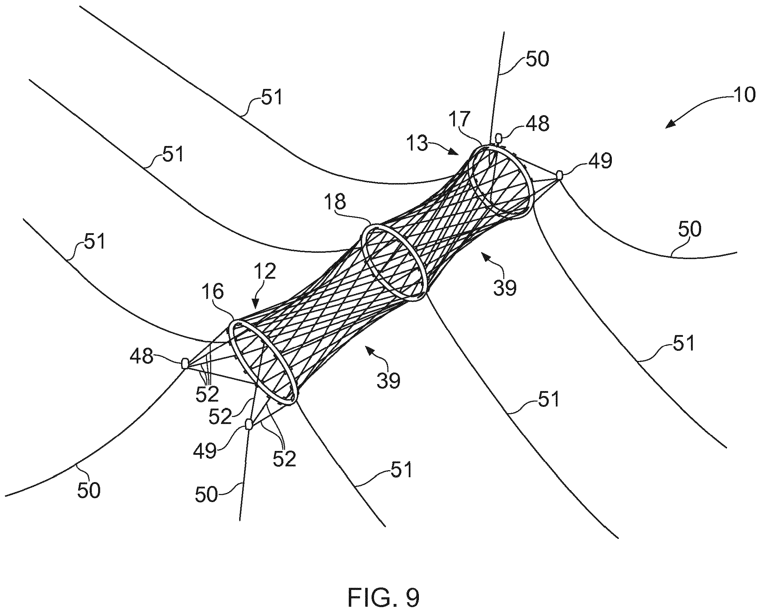

In figures 9-10 there is shown a fish farming structure 10 comprising the first support device 16 at the first end 12 of the fish farming structure 10 and the second support device 17 at the second end 13 of the fish farming structure 10. In addition, the fish farming structure 10 is provided with one additional support device, a first additional support device 18 that is arranged between the first support device 16 and the second support device 17.

Between the first support device 16 and the first additional support device 18 there is provided a longitudinal net structure 38 (preferably a net structure as shown in figure 1) that is attached to the first support device 16 and the first additional support device 18. For the sake of clarity, only the longitudinal rope structure 39 of the longitudinal net structure 38 is shown in figures 9-10.

Between the first additional support device 18 and the second support device 17 there is also provided a longitudinal net structure 38 (preferably a net structure similar to the net structure shown in figure 1) that is attached to the first additional support device 18 and the second support device 17. Again, for the sake of clarity, only the longitudinal rope structure 39 of the longitudinal net structure 38 is shown in figures 9-10.

Furthermore, at least the first support device 16 and the second support device 17 are both preferably provided with a transverse net structure 58. The transverse net structure 58 comprises a transverse mesh net 60, preferably a transverse mesh net as shown in figure 11, that is attached to a transverse rope structure 59, preferably a transverse rope structure as shown in figure 10. The transverse net structures 58 are attached to the first support device 16 and the second support device 17 respectively so that the fish farming structure 10 is closed at the first end 12 and the second end 13 of the fish farming structure 10. Other types of elements that is capable of closing the first and second ends 12, 13 of the fish farming structure 10 is also conceivable, for example solid plate elements made of steel, plastic or any other suitable material.

The fish farming structure 10 in figures 9-10 preferably also comprises a mooring system 46 as described above. The support devices 16, 17, 18 of the fish farming structure shown in figure 9 are all provided with at least two transverse mooring lines 51 that extend out from the support devices 16, 17, 18 in opposite transverse directions of the fish farming structure 10. The first support device 16 and the second support device 17 of the fish farming structure 10 shown in figure 10 is provided with at least two transverse mooring lines 51, while the first additional support device 18 of the is not provided with any transverse mooring line as shown in the figure.

The mooring system 46 further comprises a first mooring buoy 48 and a second mooring buoy 49 arranged adjacent both the first end 12 and the second end 13 of the fish farming structure 10. A plurality of buoy connecting lines 52 are connected to both the first mooring buoy 48 and the second mooring buoy 49 at both the first end 12 and the second end 13 of the fish farming structure 10. All mooring buoys 48, 49 are further connected to one or more longitudinal mooring lines 50 that extend in a substantially longitudinal direction of the fish farming structure 10.

In the same way as can be seen in figure 8, the fish farming structure 10 shown in figures 9-10 may be arranged partially submerged so that a relatively small portion of the first and second support devices 16, 17and any additional support device 18, 19 that the fish farming structure may be provided with projects above the water surface 55. That will ensure that that at least a portion of the fish farming structure's enclosed space is above the water surface 55 so that fish, such as salmon, have space to move or jump above the water surface 55. Obviously, the fish farming structure 10 may also be arranged in a completely submerged position if that is desired.

In figures 14a-d, it is shown a sequence of four consecutive snaps indicating how a fish farming structure 10 according to the present invention behaves when a large wave passes the fish farming structure. It is evident that the flexible and independent mooring of each of the three support devices 16, 17, 18 and the flexible net structure 38 allows all the support devices 16, 17, 18 to move relative to each other in all six degrees of freedom. Large forces and moments that acts on one of the support devices 16, 17, 18 are therefore not transferred, or at least transferred only to a small degree, to the other support devices 16, 17, 18. In contrast to more rigid structures, the fish farming structure 10 according to the present invention therefore is capable of withstanding severe weather conditions found at open sea with high winds large waves without being damaged.

To verify that the principles that the present fish farming structure 10 is built on works, a numerical simulation of the fish farming structure 10 has been carried out. As shown in figures two almost equivalent numerical models have been built in the commonly used, numerical software Orcaflex, which is established in the offshore industry and particularly suitable for hydrodynamic analysis of slender structures.

The two models that were built in the software for illustration and verification of the principles consist of two types of numerical elements; line elements for the main ropes and line elements for the support devices 15, 16, 17, 18, 19. In addition, the models have several nodes, of which the properties should be clear from the following description.

The length between the support devices 15, 16, 17, 18, 19 are 60m (centerline to centerline), and the diameter of the support devices 15, 16, 17, 18, 19 is 25m (modeled as a polygon with 16 edges, the diameter is measured corner to corner from center of cross section). The draft of the support devices 15, 16, 17, 18, 19 in still water is set to 22.5m, ensuring a 2.5m gap from the still water free surface to the center of the steel frame. Thirty-two load bearing ropes in a hyperboloid shape connects the support devices 15, 16, 17, 18, 19 (Sixteen ropes with clockwise rotation and sixteen ropes with counterclockwise rotation).

The support devices 15, 16, 17, 18, 19 are modeled by line elements with a distributed inertia of 347kg/m dry weight, assuming the density of a steel pipe section with cross sectional diameter of 1m and wall thickness of approximately 15mm. The hydrodynamic added mass and drag coefficient for the steel frame cross-section are set to the default value for cylinders of 1 and 1.2, respectively. In the analysis the cross-sectional bending stiffness is set to $1,14 \times 10^6$ kN (EI), axial stiffness is set to $9.38 \times 10^6$ kN (EA) and torsional stiffness is set to $8.81 \times 10^5$ (GIt). The exact properties are not relevant for the response as each of the corner nodes are connected to a master node and stiffness of the cross-sections are relatively high and as such there are only negligible deformations between the corner nodes, caused by the loads acting on the steel sections. The master node is placed in the center of the steel frames.

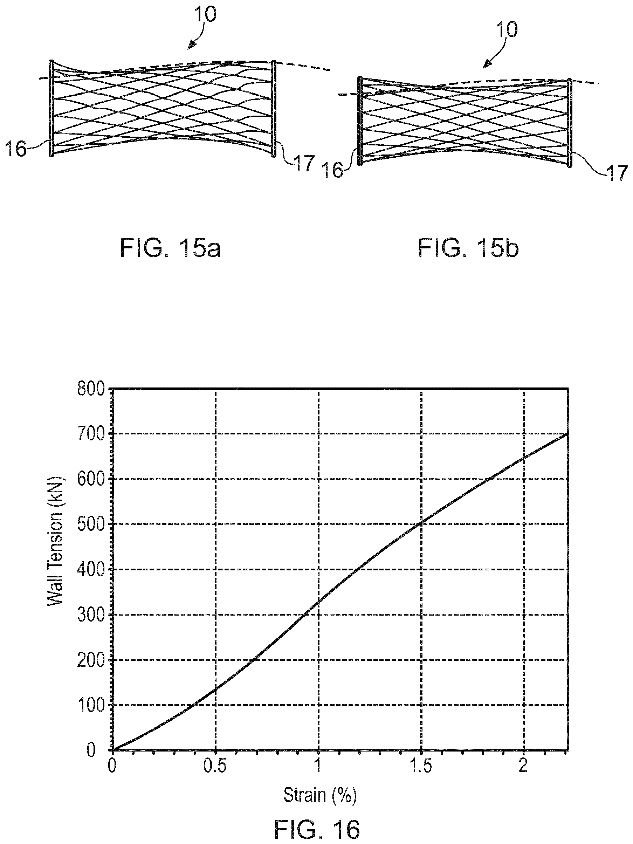

The main ropes are modeled as line elements of 62.55m length and with a circular cross-section with 44mm diameter and negligible bending and compression stiffness. The axial tension stiffness is set to follow a non-linear stiffness characteristic, typical for dyneema rope material, and the strain/tension relationship is given in figure 16. The inertia per meter rope is set to 1.5kg, dry weight. The hydrodynamic added mass coefficient is set to 1. The hydrodynamic drag coefficient is set to 20 to accommodate for the drag loads acting on the fish net, which will be carried by the main ropes. At the joint where the ropes have the same position there are midline connections between the points, as defined for example online on the following address:

https://www.orcina.com/SoftwareProducts/OrcaFlex/Documentation/Help/Content/h      tml/LineData,Mid-lineConnections.htm.

The two numerical models shown in figures 15a and 15b differ by the following:

- Flexible Model (figure 15a): The master node at the second steel frame (counting in the positive x direction in figure) can move only in the longitudinal direction of the model (x-direction in figure) and have a linear stiffness of 30kN/m. The master node at the first steel frame is fixed in all directions. A pretension is ensured by starting with an offset between the steel frames of 8m, giving a rope pretension between 5 and 10kN.

- Fixed Model (figure 15b): The master nodes at both steel frames are fixed in all directions. The ropes are pretensioned to approximately 140kN-150kN such as to ensure minimal flexible behavior of the ropes.

Using the default definitions in Orcaflex, an airy wave been simulated for the two models with a negative x-direction (180 deg as defined in Orcaflex). The wave height is 5m and the period is 8.8s (resulting in a wave length approximately twice the length between the steel frames). The model is simulated for the wave conditions 20 seconds, excluding a ramp-up of 2 seconds, using the default ramp up method for Orcaflex. The seabed is set flat and 80m.

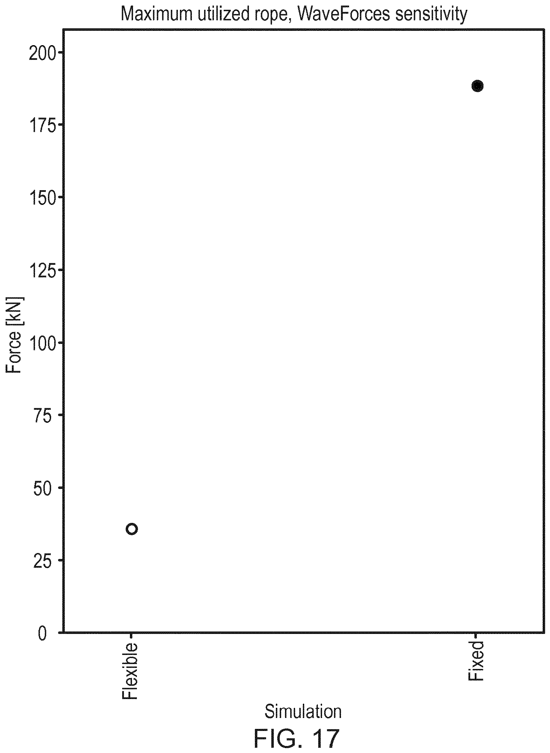

The resulting maximum response in the ropes are compared for the two models in figure 17 where it is clearly shown that there will be substantially less tension created in the main ropes in the flexibly moored fish farming structure 10 according to the present invention than in a corresponding fish farming structure that is moored so that the fish farming structure acts as a stiff structure. Note that a substantial part of the response is due to the pretension that is necessary to maintain a rigid net structure. The dynamic response for the flexible model is also substantially lower.

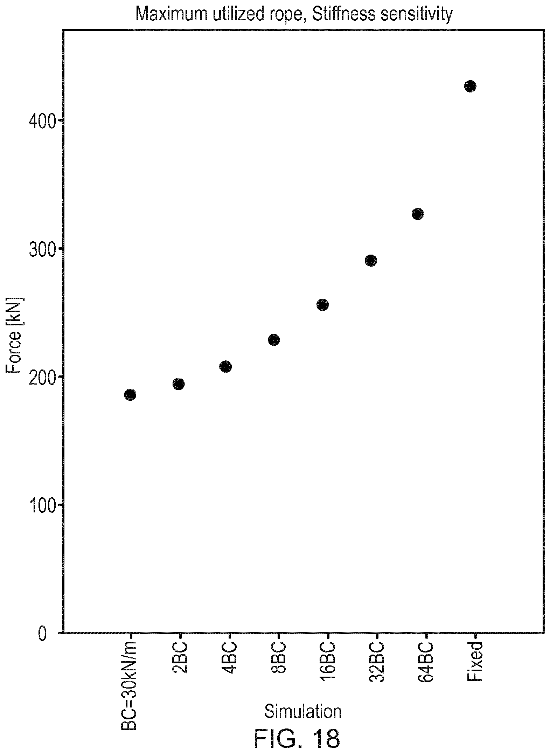

In figure 18 a number of simulations are shown indicating the stiffness sensitivity of the fish farming structure with the same model build up as described, however the complete model is displaced 10 m in the vertical direction to avoid free surface effects. In the comparison the pretension is similar for all models and a varying stiffness is applied for the different models. BC indicates the base case which entails a horizontal stiffness at the master node at 30 kN/m, and a number before BC indicates the stiffness multiplied with the number. This means that for example 4BC indicates a horizontal stiffness at the master node at 120kN/m. "Fixed" indicates a fixed connection at both end, but the same pretension level. Using the default definitions in Orcaflex, an airy wave been simulated for the models with a direction at 60 deg as defined in Orcaflex. The wave height is 10 m and the period is 8.8s (resulting in a wave length approximately twice the length between the steel frames). The model is simulated for the wave conditions 20 seconds, excluding a ramp-up of 2 seconds, using the default ramp up method for Orcaflex. The seabed is set flat and 80m.

The resulting maximum response in the ropes are compared for the models in figure 18 and clearly shows that a flexible model is significantly advantageous as compared to a rigid structure with regards to this response, and there is clear tendency that a stiffer mooring results in a higher response.

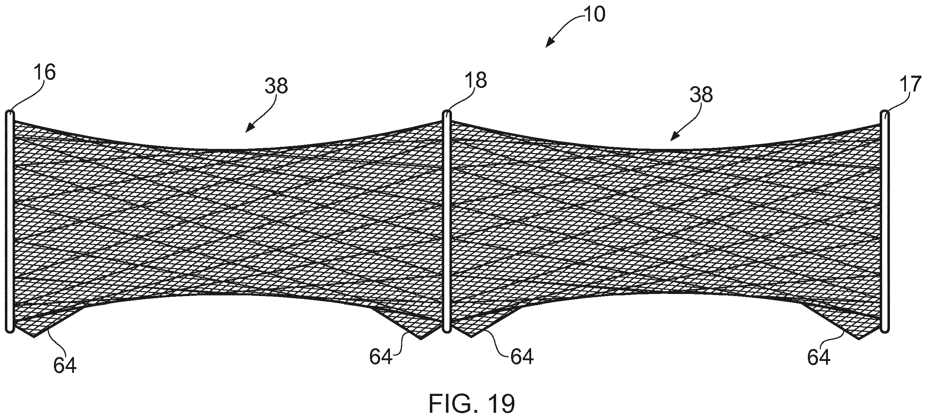

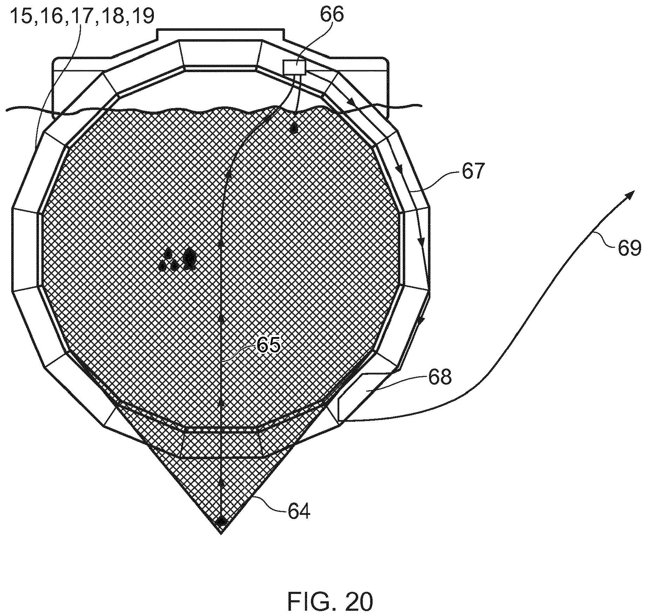

In figures 19 and 20 an embodiment of the fish farming structure 10 is shown where the net structure 38 is provided with at least one dead fish pouch 64, but preferably a number of dead fish pouches 64 as indicated in figure 19. The dead fish pouches 64 are attached to or preferably an integrated part of the longitudinal net structure 38. The dead fish pouches are open towards the interior of the fish farming structure 10 such that dead fish can be collected in the dead fish pouches 64. As shown in figure 20, the fish farming structure 10 may further be provided with at least one, but preferably a number of liftup pipes 65 that extends from the dead fish pouches 64 and up to dead fish container 66 arranged in the support structures 15, 16, 17, 18, 19. One or more pumps are preferably used to pump the dead fish that have collected in the dead fish pouches, up to the dead fish container 66. In the dead fish containers 66 the dead fish are grinded and thereafter transported to a storage container 68. A discharge pipe 69 is permanently or detachably attached to the storage container 68 and can be temporarily attached to a suitable vessel (not shown in the figure) so that the grinded dead fish that is stored storage container 68, can be transported by the vessel onshore for further treatment.

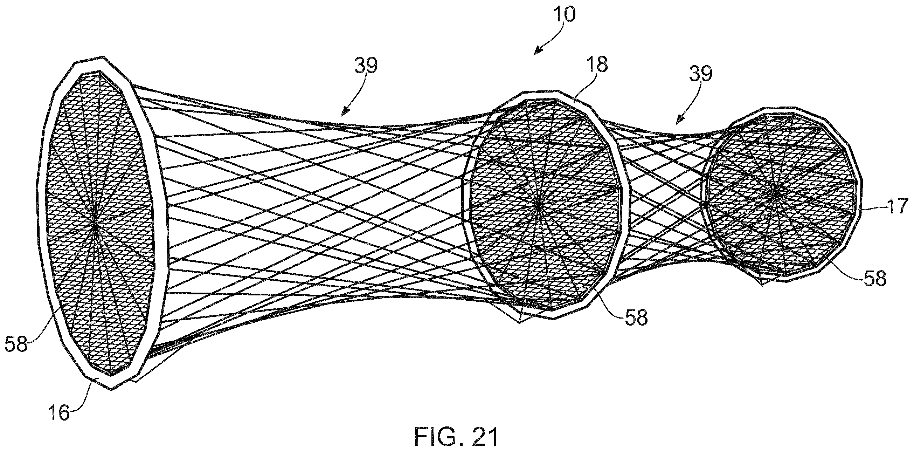

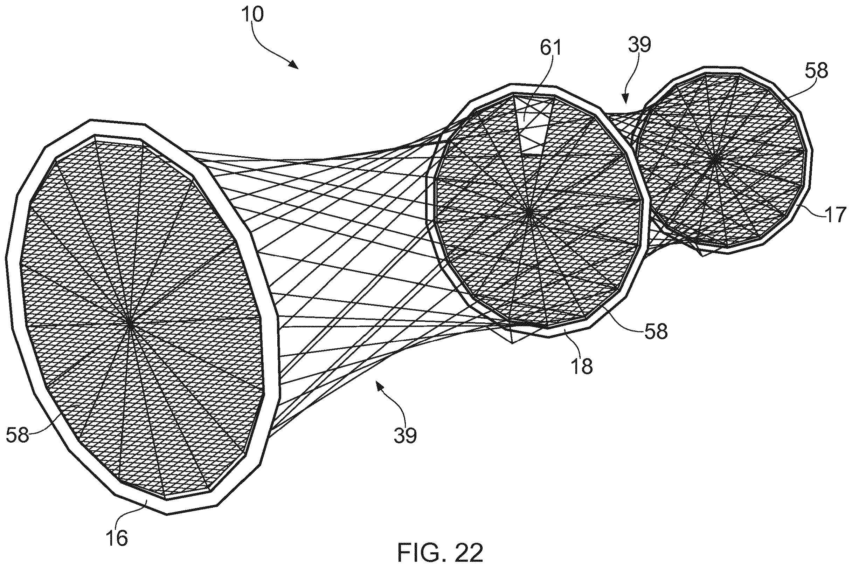

In figure 21, the fish farming structure 10 is shown with the first support device 16, the second support device 17 and the additional support device 18 and a longitudinal rope structure 39 attached to the first support device 16, the intermediate support device 18 and second support device 16. For the purpose of clarity, the longitudinal mesh net 43 is not shown. The first support device 16, the second support device 17 and the additional support device 18 are all provided with a transverse net structure 58 without any openings so that two separate compartments for fish is created in the fish farming structure 10. In figure 22, a similar embodiment of the fish farming structure 10 a similar is shown. The difference from the embodiment shown in figure 21 is that the transverse net structure 58 of the additional support device 18 is provided with an opening 61. The fish may thereby move between the two compartments of the fish farming structure 10. The opening 61 may further be provided with a closure device (not shown) that can be detachable attached to the transverse net structure 58 so that the opening 61 can be opened and closed as desired.

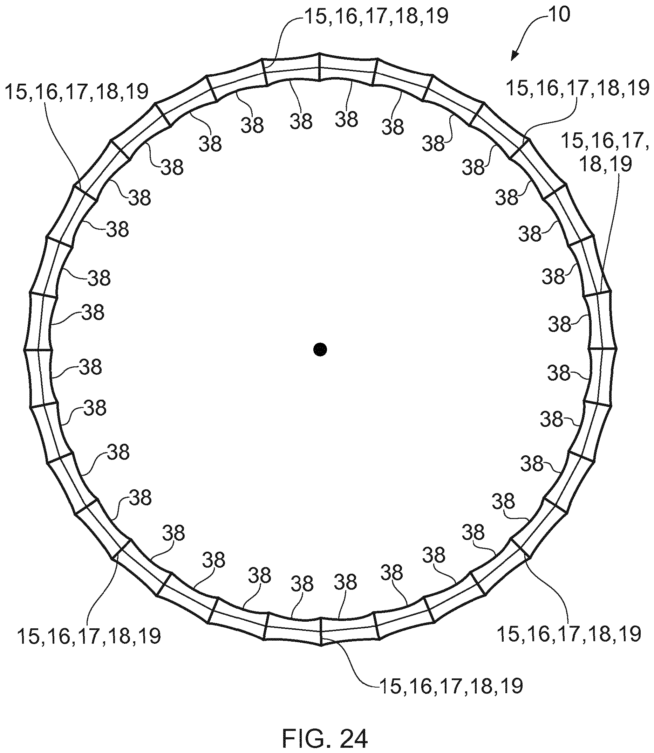

Obviously, may different configurations of the fish farming structure 10 may be created by using various numbers of support devices 15, 16, 17, 18, 19 connected with a desired number of longitudinal mesh nets 39. In figure 24 and example is shown where a fairly large number of support devices 15, 16, 17, 18, 19 are used to create a fish farming structure 10 that is formed substantially as a circle. However, many other alternative shapes of the fish farming structure 10 would be possible.

## Claims

1. A fish farming structure (10) for use semi-submerged at the water surface (55) in open sea and during severe weather conditions, the fish farming structure (10) having a longitudinal direction and a transverse direction, the fish farming structure (10) comprising:

   - at least a first support device (16) and a second support device (17),
   - a net structure (20) that extends between the first support device (16) and the second support device (17) and forms an enclosure between the first support device (16) and the second support device (17), in which enclosure fish will be kept, wherein the first support device (16) and the second support device (17) are independently moored and wherein the net structure (38) is flexible, and wherein the support devices (16, 17) are floating and submergible to a desired level and the lower part of the support devices (16, 17) is provided with at least one ballast tank (37) each for adjustment of the draft of the support devices (16, 17) and for hydrostatic stability of the support devices (16, 17).

2. Fish farming structure according to claim 1, **characterized in that** the fish farming structure (10) comprises at least one longitudinal mooring line (50) that is attached to the first support device (16) and at least one longitudinal mooring line (50) that is attached to the second support device (17), where the longitudinal mooring lines (50) provide longitudinal mooring stiffness in the longitudinal direction of the fish farming structure (10).

3. Fish farming structure according to claim 2, **characterized in that** the at least one longitudinal mooring line (50) that is attached to the first support device (16) and the at least one longitudinal mooring line (50) that is attached to the second support device (17) are arranged so that they provide longitudinal mooring stiffness in the longitudinal direction of the fish farming structure (10) and transverse mooring stiffness in the transverse direction of the fish farming structure (10).

4. Fish farming structure according to one of the claims 1-3, **characterized in that** the first support device (16) comprises at least two transverse mooring lines (51) that are attached to the first support device (16) on opposite transverse sides of the first support device (16), and that the second support device (17) comprises two transverse mooring lines (51) that are attached to the second support device (17) on opposite transverse sides of the second support device (17).

5. Fish farming structure according to one of the claims 1-4, **characterized in that** the net structure (20) comprises at least one longitudinal net structure (38) that extends between the first support device (16) and the second support device (17) and is attached to the first support device (16) and the second support device (17), and at least two transverse net structures (58) that are attached to the first support device (16) and the second support device (17) respectively such that the fish farming structure (10) is closed off in the longitudinal direction of the fish farming structure (10) at the first support device (16) and the second support device (17).

6. Fish farming structure according to one of the claims 1-5, **characterized in that** the fish farming structure (10) comprises at least one additional support device (18, 19) that is arranged between the first support device (16) and the second support device (17).

7. Fish farming structure according to claim 6, **characterized in that** the fish farming structure (10) further comprises at least one additional longitudinal net structure arranged such that the fish farming structure (10) comprises a longitudinal net structure that extends between the first support device (16) and the additional support device (18, 19) and a longitudinal net structure that extends between the additional support device (18, 19) and the second support device (17), whereby a continuous enclosure is formed between the first support device (16) and the second support device (17).

8. Fish farming structure according to claim 6 or 7, **characterized in that** the fish farming structure (10) comprises at least two transverse mooring lines (51) that are attached to the at least one additional support device (18, 19) on opposite transverse sides of the at least one additional support device (18, 19).

9. Fish farming structure according to one of the claims 1-8, **characterized in that** the net structure (20) is substantially hyperbolically shaped around a longitudinal centerline of the fish farming structure (10) between two adjacent support devices (15, 16, 17, 18, 19).

10. Fish farming structure according to claim 5, **characterized in that** each longitudinal net structure (38) comprises a plurality of ropes that are attached to two adjacent support devices (15, 16, 17, 18, 19) forming a rope structure (39) between the two adjacent support devices (15, 16, 17, 18, 19).

11. Fish farming structure according to claim 10, **characterized in that** each rope follows a path between the two adjacent support devices (15, 16, 17, 18, 19) that is substantially a straight line.

12. Fish farming structure according to claim 10 or 11, **characterized in that** the ropes of a first half of the ropes arranged between two adjacent support devices (15, 16, 17, 18, 19) follow respective paths that are substantially straight lines and with an inclination relative to the two adjacent support devices (15, 16, 17, 18, 19), and the ropes of a second half of the ropes, arranged between the same two adjacent support devices (15, 16, 17, 18, 19), follow respective paths that are substantially straight lines and with an inclination relative to the two adjacent support devices (15, 16, 17, 18, 19), but in opposite directions around a longitudinal centerline of the fish farming structure (10).

13. Fish farming structure according to claim 12, **characterized in that** the inclination of the first half of the ropes relative to the two adjacent support devices (15, 16, 17, 18, 19) is substantially equal to the inclination of the second half of the ropes relative to the two adjacent support devices (15, 16, 17, 18, 19).

14. Fish farming structure according to one of the claims 10-13, **characterized in that** each longitudinal net structure (38) comprises a mesh net (43) that is attached to the rope structure (39) of the longitudinal net structure (38).

15. Fish farming structure according to claim 6 when dependent on claim 5, **characterized in that** the fish farming structure (10) comprises at least one additional transverse net structure that is attached to the at least one additional support device (18, 19) such that the fish farming structure (10) is closed off in the longitudinal direction of the fish farming structure (10) at the at least one additional support device (18, 19).

16. Fish farming structure according to one of the claims 5-14 when claim 6 is dependent on claim 5, and claim 9 is dependent on any one of the claims 5-8, **characterized in that** each transverse net structure (58) comprises a rope structure (59) and a mesh net (60) that is attached to the rope structure (59).

17. Fish farming structure according to one of the claims 1-16, **characterized in that** the first support device (16) and the second support device (17) are closed ring-shaped or polygonally shaped structures in a cross-section perpendicular to a longitudinal center line of the fish farming structure (10).

**Patentansprüche**

1. Fischzuchtstruktur (10) zur Verwendung halb untergetaucht an der Wasseroberfläche (55) im offenen Meer und während schwerer Wetterbedingungen, wobei die Fischzuchtstruktur (10) eine Längsrichtung und eine Querrichtung aufweist, wobei die Fischzuchtstruktur (10) umfasst:

   - mindestens eine erste Stützvorrichtung (16) und eine zweite Stützvorrichtung (17),
   - eine Netzstruktur (20), die sich zwischen der ersten Stützvorrichtung (16) und der zweiten Stützvorrichtung (17) erstreckt und ein Gehege zwischen der ersten Stützvorrichtung (16) und der zweiten Stützvorrichtung (17) bildet, in dem Fische gehalten werden sollen,

   wobei die erste Stützvorrichtung (16) und die zweite Stützvorrichtung (17) unabhängig voneinander verankert sind und wobei die Netzstruktur (38) flexibel ist, und wobei die Stützvorrichtungen (16, 17) schwimmend und bis zu einem gewünschten Niveau eintauchbar sind und der untere Teil der Stützvorrichtungen (16, 17) mit mindestens je einem Ballasttank (37) zur Einstellung des Tiefgangs der Stützvorrichtungen (16, 17) und zur hydrostatischen Stabilität der Stützvorrichtungen (16, 17) versehen ist.

2. Fischzuchtstruktur nach Anspruch 1, **dadurch gekennzeichnet, dass** die Fischzuchtstruktur (10) mindestens eine Längsverankerungsleine (50) umfasst, die an der ersten Stützvorrichtung (16) befestigt ist, und mindestens eine Längsverankerungsleine (50), die an der zweiten Stützvorrichtung (17) befestigt ist, wobei die Längsverankerungsleinen (50) eine Längsverankerungssteifigkeit in der Längsrichtung der Fischzuchtstruktur (10) bieten.

3. Fischzuchtstruktur nach Anspruch 2, **dadurch gekennzeichnet, dass** die mindestens eine Längsverankerungsleine (50), die an der ersten Stützvorrichtung (16) befestigt ist, und die mindestens eine Längsverankerungsleine (50), die an der zweiten Stützvorrichtung (17) befestigt ist, so angeordnet sind, dass sie eine Längsverankerungssteifigkeit in der Längsrichtung der Fischzuchtstruktur (10) und eine Querverankerungssteifigkeit in der Querrichtung der Fischzuchtstruktur (10) bieten.

4. Fischzuchtstruktur nach einem der Ansprüche 1 bis 3, **dadurch gekennzeichnet, dass** die erste Stützvorrichtung (16) mindestens zwei Querverankerungsleinen (51) umfasst, die an der ersten Stützvorrichtung (16) an gegenüberliegenden Querseiten der ersten Stützvorrichtung (16) befestigt sind, und dass die zweite Stützvorrichtung (17) zwei Querverankerungsleinen (51) umfasst, die an der zweiten Stützvorrichtung (17) an gegenüberliegenden Querseiten der zweiten Stützvorrichtung (17) befestigt sind.

5. Fischzuchtstruktur nach einem der Ansprüche 1 bis 4, **dadurch gekennzeichnet, dass** die Netzstruktur (20) mindestens eine Längsnetzstruktur (38), die sich zwischen der ersten Stützvorrichtung (16) und der zweiten Stützvorrichtung (17) erstreckt und an der ersten Stützvorrichtung (16) und der zweiten Stützvorrichtung (17) befestigt ist, und mindestens zwei Quernetzstrukturen (58) umfasst, die an der ersten Stützvorrichtung (16) bzw. der zweiten Stützvorrichtung (17) befestigt sind, so dass die Fischzuchtstruktur (10) in der Längsrichtung der Fischzuchtstruktur (10) an der ersten Stützvorrichtung (16) und der zweiten Stützvorrichtung (17) geschlossen ist.

6. Fischzuchtstruktur nach einem der Ansprüche 1 bis 5,
   **dadurch gekennzeichnet, dass** die Fischzuchtstruktur (10) mindestens eine zusätzliche Stützvorrichtung (18, 19) umfasst, die zwischen der ersten Stützvorrichtung (16) und der zweiten Stützvorrichtung (17) angeordnet ist.

7. Fischzuchtstruktur nach Anspruch 6,
   **dadurch gekennzeichnet, dass** die Fischzuchtstruktur (10) des Weiteren mindestens eine zusätzliche Längsnetzstruktur umfasst, die so angeordnet ist, dass die Fischzuchtstruktur (10) eine Längsnetzstruktur, die sich zwischen der ersten Stützvorrichtung (16) und der zusätzlichen Stützvorrichtung (18, 19) erstreckt, und eine Längsnetzstruktur, die sich zwischen der zusätzlichen Stützvorrichtung (18, 19) und der zweiten Stützvorrichtung (17) erstreckt, umfasst, wodurch ein durchgehendes Gehege zwischen der ersten Stützvorrichtung (16) und der zweiten Stützvorrichtung (17) gebildet wird.

8. Fischzuchtstruktur nach Anspruch 6 oder 7,
   **dadurch gekennzeichnet, dass** die Fischzuchtstruktur (10) mindestens zwei Querverankerungsleinen (51) umfasst, die an der mindestens einen zusätzlichen Stützvorrichtung (18, 19) an gegenüberliegenden Querseiten der mindestens einen zusätzlichen Stützvorrichtung (18, 19) befestigt sind.

9. Fischzuchtstruktur nach einem der Ansprüche 1 bis 8,
   **dadurch gekennzeichnet, dass** die Netzstruktur (20) im Wesentlichen hyperbolisch um eine Längsmittellinie der Fischzuchtstruktur (10) zwischen zwei benachbarten Stützvorrichtungen (15, 16, 17, 18, 19) geformt ist.

10. Fischzuchtstruktur nach Anspruch 5,
    **dadurch gekennzeichnet, dass** jede Längsnetzstruktur (38) eine Vielzahl von Seilen umfasst, die an zwei benachbarten Stützvorrichtungen (15, 16, 17, 18, 19) befestigt sind und eine Seilstruktur (39) zwischen den beiden benachbarten Stützvorrichtungen (15, 16, 17, 18, 19) bilden.

11. Fischzuchtstruktur nach Anspruch 10,
    **dadurch gekennzeichnet, dass** jedes Seil einer Bahn zwischen den beiden benachbarten Stützvorrichtungen (15, 16, 17, 18, 19) folgt, die im Wesentlichen geradlinig ist.

12. Fischzuchtstruktur nach Anspruch 10 oder 11,
    **dadurch gekennzeichnet, dass** die Seile einer ersten Hälfte der Seile, die zwischen zwei benachbarten Stützvorrichtungen (15, 16, 17, 18, 19) angeordnet sind, jeweiligen Bahnen folgen, die im Wesentlichen geradlinig und mit einer Neigung relativ zu den beiden benachbarten Stützvorrichtungen (15, 16, 17, 18, 19) verlaufen, und die Seile einer zweiten Hälfte der Seile, die zwischen denselben zwei benachbarten Stützvorrichtungen (15, 16, 17, 18, 19) angeordnet sind, jeweiligen Bahnen folgen, die im Wesentlichen geradlinig und mit einer Neigung relativ zu den zwei benachbarten Stützvorrichtungen (15, 16, 17, 18, 19), aber in entgegengesetzten Richtungen um eine Längsmittellinie der Fischzuchtstruktur (10) verlaufen.

13. Fischzuchtstruktur nach Anspruch 12,
    **dadurch gekennzeichnet, dass** die Neigung der ersten Hälfte der Seile relativ zu den beiden benachbarten Stützvorrichtungen (15, 16, 17, 18, 19) im Wesentlichen gleich der Neigung der zweiten Hälfte der Seile relativ zu den beiden benachbarten Stützvorrichtungen (15, 16, 17, 18, 19) ist.

14. Fischzuchtstruktur nach einem der Ansprüche 10 bis 13,
    **dadurch gekennzeichnet, dass** jede Längsnetzstruktur (38) ein Maschennetz (43) umfasst, das an der Seilstruktur (39) der Längsnetzstruktur (38) befestigt ist.

15. Fischzuchtstruktur nach Anspruch 6 in Abhängigkeit von Anspruch 5,
    **dadurch gekennzeichnet, dass** die Fischzuchtstruktur (10) mindestens eine zusätzliche Quernetzstruktur umfasst, die an der mindestens einen zusätzlichen Stützvorrichtung (18, 19) befestigt ist, so dass die Fischzuchtstruktur (10) in der Längsrichtung der Fischzuchtstruktur (10) an der mindestens einen zusätzlichen Stützvorrichtung (18, 19) geschlossen ist.

16. Fischzuchtstruktur nach einem der Ansprüche 5 bis 14, wenn Anspruch 6 von Anspruch 5 abhängig ist und Anspruch 9 von einem der Ansprüche 5 bis 8 abhängig ist, **dadurch gekennzeichnet, dass** jede Quernetzstruktur (58) eine Seilstruktur (59) und ein Maschennetz (60) umfasst, das an der Seilstruktur (59) befestigt ist.

17. Fischzuchtstruktur nach einem der Ansprüche 1 bis 16,
    **dadurch gekennzeichnet, dass** die erste Stützvorrichtung (16) und die zweite Stützvorrichtung (17) geschlossene ringförmige oder polygonal geformte Strukturen in einem Querschnitt senkrecht zu einer Längsmittellinie der Fischzuchtstruktur (10) sind.

**Revendications**

1. Structure d'élevage de poissons (10) destinée à être utilisée en semi-immersion à la surface de l'eau (55) en pleine mer et dans des conditions météorologiques difficiles, la structure d'élevage de poissons (10) ayant une direction longitudinale et une direction transversale, la structure d'élevage de poissons (10) comprenant :

   - au moins un premier dispositif support (16) et un deuxième dispositif support (17),
   - une structure de filet (20) qui s'étend entre le premier dispositif support (16) et le deuxième dispositif support (17) et forme une enceinte entre le premier dispositif support (16) et le deuxième dispositif support (17), enceinte dans laquelle des poissons seront gardés,

   dans laquelle le premier dispositif support (16) et le deuxième dispositif support (17) sont amarrés indépendamment et dans laquelle la structure de filet (38) est flexible, et dans laquelle les dispositifs supports (16, 17) sont flottants et submersibles à un niveau souhaité et la partie inférieure des dispositifs supports (16, 17) est pourvue d'au moins une caisse de ballast (37) chacune pour le réglage du tirant d'eau des dispositifs supports (16, 17) et pour la stabilité hydrostatique des dispositifs supports (16, 17).

2. Structure d'élevage de poissons selon la revendication 1,
   **caractérisée en ce que** la structure d'élevage de poissons (10) comprend au moins une ligne d'amarrage longitudinale (50) qui est fixée au premier dispositif support (16) et au moins une ligne d'amarrage longitudinale (50) qui est fixée au deuxième dispositif support (17), où les lignes d'amarrage longitudinales (50) fournissent une rigidité d'amarrage longitudinale dans la direction longitudinale de la structure d'élevage de poissons (10).

3. Structure d'élevage de poissons selon la revendication 2,
   **caractérisée en ce que** l'au moins une ligne d'amarrage longitudinale (50) qui est fixée au premier dispositif support (16) et l'au moins une ligne d'amarrage longitudinale (50) qui est fixée au deuxième dispositif support (17) sont agencées de sorte qu'elles fournissent une rigidité d'amarrage longitudinale dans la direction longitudinale de la structure d'élevage de poissons (10) et une rigidité d'amarrage transversale dans la direction transversale de la structure d'élevage de poissons (10).

4. Structure d'élevage de poissons selon l'une des revendications 1 à 3,
   **caractérisée en ce que** le premier dispositif support (16) comprend au moins deux lignes d'amarrage transversales (51) qui sont fixées au premier dispositif support (16) sur des côtés transversaux opposés du premier dispositif support (16), et **en ce que** le deuxième dispositif support (17) comprend deux lignes d'amarrage transversales (51) qui sont fixées au deuxième dispositif support (17) sur des côtés transversaux opposés du deuxième dispositif support (17).

5. Structure d'élevage de poissons selon l'une des revendications 1 à 4,
   **caractérisée en ce que** la structure de filet (20) comprend au moins une structure de filet longitudinale (38) qui s'étend entre le premier dispositif support (16) et le deuxième dispositif support (17) et est fixée au premier dispositif support (16) et au deuxième dispositif support (17), et au moins deux structures de filet transversales (58) qui sont fixées au premier dispositif support (16) et au deuxième dispositif support (17) respectivement de sorte que la structure d'élevage de poissons (10) soit fermée dans la direction longitudinale de la structure d'élevage de poissons (10) au niveau du premier dispositif support (16) et du deuxième dispositif support (17).

6. Structure d'élevage de poissons selon l'une des revendications 1 à 5,
   **caractérisée en ce que** la structure d'élevage de poissons (10) comprend au moins un dispositif support (18, 19) supplémentaire qui est agencé entre le premier dispositif support (16) et le deuxième dispositif support (17).

7. Structure d'élevage de poissons selon la revendication 6,
   **caractérisée en ce que** la structure d'élevage de poissons (10) comprend en outre au moins une structure de filet longitudinale supplémentaire agencée de sorte que la structure d'élevage de poissons (10) comprenne une structure de filet longitudinale qui s'étend entre le premier dispositif support (16) et le dispositif support (18, 19) supplémentaire et une structure de filet longitudinale qui s'étend entre le dispositif support (18, 19) supplémentaire et le deuxième dispositif support (17), moyennant quoi une enceinte continue est formée entre le premier dispositif support (16) et le deuxième dispositif support (17).

8. Structure d'élevage de poissons selon la revendication 6 ou 7,
   **caractérisée en ce que** la structure d'élevage de poissons (10) comprend au moins deux lignes d'amarrage transversales (51) qui sont fixées à l'au moins un dispositif support (18, 19) supplémentaire sur des côtés transversaux opposés de l'au moins un dispositif support (18, 19) supplémentaire.

9. Structure d'élevage de poissons selon l'une des revendications 1 à 8, **caractérisée en ce que** la structure de filet (20) a une forme sensiblement hyperbolique autour d'une ligne centrale longitudinale de la structure d'élevage de poissons (10) entre deux dispositifs supports (15, 16, 17, 18, 19) adjacents.

10. Structure d'élevage de poissons selon la revendication 5, **caractérisée en ce que** chaque structure de filet longitudinale (38) comprend une pluralité de cordages qui sont fixés à deux dispositifs supports (15, 16, 17, 18, 19) adjacents formant une structure de cordage (39) entre les deux dispositifs supports (15, 16, 17, 18, 19) adjacents.

11. Structure d'élevage de poissons selon la revendication 10, **caractérisée en ce que** chaque cordage suit un chemin entre les deux dispositifs supports (15, 16, 17, 18, 19) adjacents qui est sensiblement une ligne droite.

12. Structure d'élevage de poissons selon la revendication 10 ou 11, **caractérisée en ce que** les cordages d'une première moitié des cordages agencés entre deux dispositifs supports (15, 16, 17, 18, 19) adjacents suivent des chemins respectifs qui sont sensiblement des lignes droites et avec une inclinaison par rapport aux deux dispositifs supports (15, 16, 17, 18, 19) adjacents, et les cordages d'une deuxième moitié des cordages, agencés entre les mêmes deux dispositifs supports (15, 16, 17, 18, 19) adjacents, suivent des chemins respectifs qui sont sensiblement des lignes droites et avec une inclinaison par rapport aux deux dispositifs supports (15, 16, 17, 18, 19) adjacents, mais dans des directions opposées autour d'une ligne centrale longitudinale de la structure d'élevage de poissons (10).

13. Structure d'élevage de poissons selon la revendication 12, **caractérisée en ce que** l'inclinaison de la première moitié des cordages par rapport aux deux dispositifs supports (15, 16, 17, 18, 19) adjacents est sensiblement égale à l'inclinaison de la deuxième moitié des cordages par rapport aux deux dispositifs supports (15, 16, 17, 18, 19) adjacents.

14. Structure d'élevage de poissons selon l'une des revendications 10 à 13, **caractérisée en ce que** chaque structure de filet longitudinale (38) comprend un filet à mailles (43) qui est fixé à la structure de cordage (39) de la structure de filet longitudinale (38).

15. Structure d'élevage de poissons selon la revendication 6 lorsqu'elle dépend de la revendication 5, **caractérisée en ce que** la structure d'élevage de poissons (10) comprend au moins une structure de filet transversale supplémentaire qui est fixée à l'au moins un dispositif support (18, 19) supplémentaire de sorte que la structure d'élevage de poissons (10) soit fermée dans la direction longitudinale de la structure d'élevage de poissons (10) au niveau de l'au moins un dispositif support (18, 19) supplémentaire.

16. Structure d'élevage de poissons selon l'une des revendications 5 à 14 lorsque la revendication 6 dépend de la revendication 5, et que la revendication 9 dépend de l'une quelconque des revendications 5 à 8, **caractérisée en ce que** chaque structure de filet transversale (58) comprend une structure de cordage (59) et un filet à mailles (60) qui est fixé à la structure de cordage (59).

17. Structure d'élevage de poissons selon l'une des revendications 1 à 16, **caractérisée en ce que** le premier dispositif support (16) et le deuxième dispositif support (17) sont des structures fermées de forme annulaire ou de forme polygonale dans une section transversale perpendiculaire à une ligne centrale longitudinale de la structure d'élevage de poissons (10).

FIG. 1

EP 3 709 797 B1

FIG. 2

FIG. 3

FIG. 4

FIG. 5

FIG. 6

FIG. 7

FIG. 8

FIG. 9

EP 3 709 797 B1

FIG. 10

FIG. 11

FIG. 12

FIG. 13

FIG. 14b

FIG. 14a

FIG. 14d

FIG. 14c

EP 3 709 797 B1

FIG. 15a          FIG. 15b

FIG. 16

34

Maximum utilized rope, WaveForces sensitivity

FIG. 17

Maximum utilized rope, Stiffness sensitivity

FIG. 18

FIG. 19

FIG. 20

FIG. 21

FIG. 22

15,16,17,18,19

FIG. 23

FIG. 24

Monohull ship
Catamaran

Wave radiation

Semi-submersible

Viscous effects

FIG. 25

EP 3 709 797 B1

FIG. 26a

FIG. 26b

FIG. 26c

FIG. 27

## REFERENCES CITED IN THE DESCRIPTION

**Patent documents cited in the description**

- CN 106719215 A
- CN 106719214 A
- GB 2473648 A
- WO 2014072788 A1
- CN 103125414 A
- US 772360 A